# EUROPEAN PATENT APPLICATION

(11) **EP 4 178 281 A1**
(43) Date of publication of application: **10.05.2023**
(21) Application number: 21833783.0
(22) Date of filing: 16.06.2021
(51) Int. Cl.: H04W 56/00, H04W 72/04, H04W 92/20, H04W 84/12

(54) **CONTROL DEVICE AND CONTROL METHOD THEREFOR, COMMUNICATION DEVICE AND COMMUNICATION METHOD THEREFOR, AND PROGRAM**

(30) Priority: 03.07.2020 JP 2020115989
(71) Applicant: CANON KABUSHIKI KAISHA, Tokyo 146-8501 (JP)
(72) Inventor: YOSHIKAWA, Yuki, Tokyo 146-8501 (JP)
(74) Representative: Canon Europe Limited
(86) International application number: PCT/JP2021/022856
(87) International publication number: WO 2022/004386

(57) **Abstract**

A control apparatus transmits, to a first communication apparatus, a frame for triggering communication complying with an IEEE802.11 standard series between the first communication apparatus and a second communication apparatus, which includes information concerning a frequency channel to be used for the communication.

## Description

### TECHNICAL FIELD

The present invention relates to a resource control technique for wireless communication.

### BACKGROUND ART

Along with the recent increase in a data amount to be communicated, communication techniques such as a wireless local area network (LAN) have been developed. As the main communication standard of the wireless LAN, the Institute of Electrical and Electronics Engineers (IEEE) 802.11 standard series is known. The IEEE802.11 standard series includes IEEE802.11a/b/g/n/ac/ax standards. For example, in the latest IEEE802.11ax standard, a technique for not only implementing high peak throughput of 9.6 gigabits per sec (Gbps) at maximum but also improving the communication speed under congestion by using Orthogonal Frequency-Division Multiple Access (OFDMA) is standardized (see PTL 1). Note that OFDMA is an abbreviation for Orthogonal Frequency-Division Multiple Access.

On the other hand, to further improve the throughput, the frequency use efficiently, and the latency of communication, Task Group for a standard called IEEE802.11be succeeding IEEE802.11ax has been formed. In the IEEE802.1The standard, there has been examined a technique for allowing a plurality of access points (to be sometimes referred to as "APs" hereinafter) to operate in cooperation with each other to perform data communication with a station (to be sometimes referred to as an "STA" hereinafter). The plurality of APs cooperate with each other to communicate with the STA, thereby making it possible to improve the communication performance by improving the communication rate and suppressing interference between radio signals respectively transmitted from the plurality of APs and the STA.

### CITATION LIST

### PATENT LITERATURE

PTL 1: Japanese Patent Laid-Open No. 2018-050133

### SUMMARY OF INVENTION

### TECHNICAL PROBLEM

The present invention provides a technique for further improving the communication performance when a plurality of access points simultaneously communicate with a station.

### SOLUTION TO PROBLEM

The present invention provides a technique of appropriately executing control communication for comprehensively controlling communications in a plurality of wireless links.

According to one aspect of the present invention, there is provided a control apparatus comprising transmission means for transmitting, to a first communication apparatus, a frame for triggering communication complying with an IEEE802.11 standard series between the first communication apparatus and a second communication apparatus, which includes information concerning a frequency channel to be used for the communication.

### ADVANTAGEOUS EFFECTS OF INVENTION

According to the present invention, it is possible to further improve the communication performance when a plurality of access points simultaneously communicate with a station.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
Fig. 1 is a view showing an example of the configuration of a network;
Fig. 2 is a block diagram showing an example of the hardware arrangement of a communication apparatus;
Fig. 3 is a block diagram showing an example of the functional arrangement of the communication apparatus;
Fig. 4A is a flowchart illustrating the first example of the procedure of processing executed by a master AP;
Fig. 4B is a flowchart illustrating the first example of the procedure of the processing executed by the master AP;
Fig. 5A is a flowchart illustrating the first example of the procedure of processing executed by a slave AP;
Fig. 5B is a flowchart illustrating the first example of the procedure of the processing executed by the slave AP;
Fig. 6 is a sequence chart showing an example of the procedure of processing when transmitting data to an STA;
Fig. 7A is a flowchart illustrating the second example of the procedure of the processing executed by the master AP;
Fig. 7B is a flowchart illustrating the second example of the procedure of the processing executed by the master AP;
Fig. 8A is a flowchart illustrating the second example of the procedure of the processing executed by the slave AP;
Fig. 8B is a flowchart illustrating the second example of the procedure of the processing executed by the slave AP;
Fig. 9 is a sequence chart showing an example of the procedure of processing when receiving data from the STA;
Fig. 10 is a sequence chart showing an example of the procedure of processing when transmitting data to a plurality of STAs;
Fig. 11 is a sequence chart showing an example of the procedure of processing when receiving data from the plurality of STAs;
Fig. 12 is a view showing the first example of the structure of a trigger frame; and
Fig. 13 is a view showing the second example of the structure of the trigger frame.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

### (Configuration of Network)

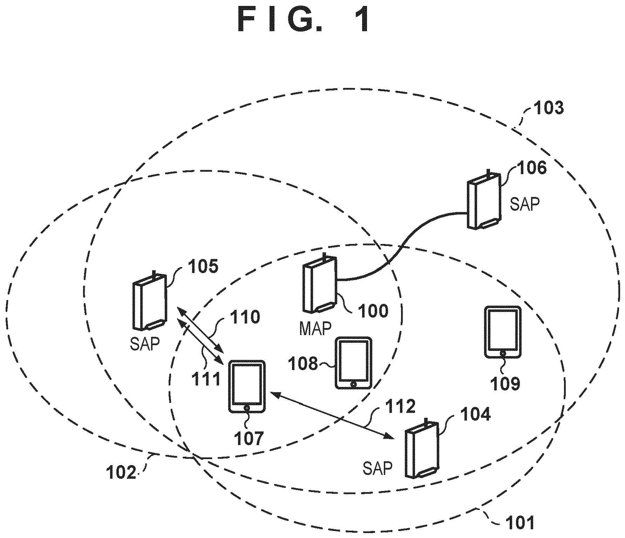

Fig. 1 shows an example of the configuration of a network according to an embodiment. Each of networks 101 to 103 is formed by an access point (for example, at least one of APs 100 and 104 to 106) complying with the IEEE802.11 standard series including the IEEE802.11be (EHT) standard. Note that IEEE is an acronym for Institute of Electrical and Electronics Engineers. EHT is an acronym for Extremely High Throughput or Extreme High Throughput. Each station (STAs 107 to 109) complying with the IEEE802.11be standard joins at least one of these networks to perform wireless communication with at least one of the APs 104 to 106. Note that a case in which each network is a wireless LAN complying with the IEEE802.11 standard series will be described below. However, the following discussion is applicable to various kinds of wireless communication networks having the same communication function. That is, each of the AP and the STA is an example of a communication apparatus in various kinds of wireless communication systems, and is not limited to the AP or the STA in the wireless LAN complying with the IEEE802.11 standard series. If it is unnecessary to particularly discriminate the AP and the STA, these apparatuses will sometimes collectively be referred to as "communication apparatuses" hereinafter.

Note that each communication apparatus is assumed to comply with at least the IEEE802.11be standard. In addition to this, each communication apparatus may support a legacy standard defined before the IEEE802.11be standard. For example, each communication apparatus may support at least one of the IEEE802.11a/b/g/n/ac/ax standards. Furthermore, in addition to the IEEE802.11 standard series, each communication apparatus may support another communication standard such as Bluetooth^{®}, NFC, UWB, ZigBee, or MBOA. Note that UWB is an abbreviation for Ultra Wide Band, and NMOA is an abbreviation for Multi Band OFDM Alliance. Furthermore, NFC is an abbreviation for Near Field Communication. UWB includes wireless USB, wireless 1394, and WiNET. In addition, each communication apparatus may support a communication standard of wired communication such as a wired LAN.

In this embodiment, each AP can be, for example, a wireless LAN router, a personal computer (PC), or the like, but is not limited to them. Each of the APs 104 to 106 may be an information processing apparatus such as a radio chip that can execute wireless communication complying with the IEEE802.11be standard. Each of the STAs 107 to 109 can be, for example, a camera, a tablet, a smartphone, a PC, a mobile phone, a video camera, or the like, but is not limited to them. Each of the STAs 107 to 109 may be an information processing apparatus such as a radio chip that can execute wireless communication complying with the IEEE802.11be standard. Furthermore, Fig. 1 shows an example of the network configuration including the four APs and the three STAs but the number of APs, the number of STAs, and their arrangement positions are not limited to this example.

In the example shown in Fig. 1, each of the STAs 107 and 108 is located within the communicable range of each of the networks 101, 102, and 103, and is connected to at least one of the networks to execute communication. The STA 109 is located within the communicable range of each of the networks 101 and 103, and is connected to at least one of the networks to execute communication. Note that in Fig. 1, the network 101 is formed by the AP 104, the network 102 is formed by the AP 105, and the network 103 is formed by the AP 106. As will be described later, assume that the AP 100 functions as a control apparatus (master AP) to communicate with the APs 104 to 106 and cause them to communicate with the STAs.

Note that if the APs 104 to 106 form the networks individually, the BSSIDs of the networks are different from each other. Note that BSSID is an acronym for Basic Service Set Identifier, and is an identifier for identifying a network. Each of the APs 100 and 104 to 106 sets a common SSID as an SSID indicated in each network. Note that SSID is an abbreviation for Service Set Identifier, and is an identifier for identifying an access point. In this embodiment, even if each of the APs 100 and 104 to 106 establishes a plurality of connections, one SSID is commonly used.

Each communication apparatus can execute communication of multiplexing signals of a plurality of users by executing Orthogonal Frequency Division Multiple Access (OFDMA) communication complying with the IEEE802.11be standard. Such communication executed by multiplexing signals of a plurality of users is called multi-user (MU) communication. In OFDMA communication, resource units (RUs) as frequency resources obtained by dividing a system bandwidth by a predetermined size are allocated to the respective STAs not to overlap each other. This can prevent the signals of the respective STAs from interfering with each other or suppress an interference amount, and the AP can simultaneously communicate with the plurality of STAs within the system band. For example, the AP 104 can simultaneously execute communications with the STAs 107 to 109 by allocating, to these STAs, the RUs not overlapping each other.

Each communication apparatus can execute communication using 20-, 40-, 80-, 160-, and 320-MHz bandwidths. Each communication apparatus may use a bandwidth, such as 240- or 4-MHz bandwidth, different from the above-described bandwidths. Note that in the IEEE802.11 standard series, the bandwidth of each frequency channel is defined as 20 MHz. On the other hand, a bandwidth of 40 MHz or more can be used in one frequency channel by bonding adjacent frequency channels. Each communication apparatus can execute communication in a frequency channel in each of the 2.4-, 5-, and 6-GHz bands, and may also be able to use a frequency channel in a frequency band such as 60-GHz band.

Note that each communication apparatus can execute communication simultaneously using channels in a plurality of frequency bands by multi-link communication. For example, the AP 105 can establish, with the STA 107, a first link 110 via the first frequency channel in the 2.4-GHz band and a second link 111 via a second frequency channel in the 5-GHz band, and can execute communication via both the links. In this case, the AP 105 maintains the second link 111 via the second frequency channels while maintaining the first link 110 via the first frequency channel. If multi-link communication is performed, each of the AP 105 and the STA 107 divides one data and transmits the divided data to the partner apparatus via the plurality of links. Thus, the AP 105 can establish wireless links with the STA 107 via the plurality of frequency channels, thereby improving throughput in communication with the STA 107. Note that in this embodiment, the link 110 is established in the 20-MHz bandwidth in channel 5 in the 2.4-GHz band, and its link number is 1. The link 111 is established in the 40-MHz bandwidth in channel 36 in the 5-GHz band, and its link number is 2. In addition, a link 112 between the AP 104 and the STA 107 is established in the 40-MHz bandwidth in channel 36 in in the 5-GHz band.

Note that the AP 105 and the STA 107 may further establish a link in addition to the first link 110 and the second link 111, thereby establishing three or more links to execute communication. For example, the AP 105 and the STA 107 may establish the third link using a frequency channel in the 6-GHz band in addition to the above-described first link 110 and second link 111. A plurality of links using a plurality of different channels included in the same frequency band may be established. For example, the AP 105 and the STA 107 may establish the first link 110 using channel 1 in the 2.4-GHz band, and establish the second link 111 using channel 5 in the 2.4-GHz band. Note that links of the same frequency band and links of different frequency bands may be mixed. For example, the AP 105 and the STA 107 may establish the first link 110 and the second link 111 using channel 1 and channel 5 in the 2.4-GHz band, respectively, and also establish the third link using channel 36 in the 5-GHz band. If the AP 105 and the STA 107 establish the plurality of connections across a plurality of frequency bands, even if a given band is congested, it is possible to execute communication in another band, thereby preventing degradation of throughput in communication. The plurality of links established in multi-link communication use at least different frequency channels. The spacing between the frequency channels of the plurality of links established in multi-link communication is set to at least a spacing larger than 20 MHz.

Each communication apparatus may be configured to execute Multiple-Input and Multiple-Output (MIMOt) communication. For example, each of a transmission-side communication apparatus and a reception-side communication apparatus includes a plurality of antennas, and the transmission-side apparatus uses the same frequency channel to transmit different signals from the plurality of antennas. Then, the reception-side apparatus simultaneously receives all the signals arriving at the plurality of reception antennas, separates the signals of the streams, and decodes them. Thus, the plurality of data streams are simultaneously transmitted/received using the same frequency channel in the same time interval. In this way, it is possible to transmit/receive more data during a period of the same time length by using MIMO communication. Furthermore, when performing multi-link communication, MIMO communication may be executed only in some of the plurality of established links. For example, the distributed-MIMO technology based on the MIMO technology may be used. In distributed-MIMO, in an environment in which there exist a plurality of APs and a plurality of STAs, the plurality of APs share information concerning a communication state or the states of the apparatuses, and perform communication at the same timing. When the plurality of APs execute communication in cooperation with each other, the number of spatial streams can be increased, as compared with a case in which a signal AP executes communication, thereby improving throughput. Note that cooperative beamforming based on beamforming technology for performing beam control of, for example, using the plurality of antennas to increase the antenna gain in a given direction and decrease the antenna gain in another direction may be used. In cooperative beamforming, if an AP transmits data to an STA belonging to a Basic Service Set (BSS), the antenna gain in the direction of the STA is increased and the antenna gain in the direction of an STA belonging to the BSS of another AP is decreased. For example, the AP may use one of antenna patterns prepared in advance, or may calculate an antenna pattern every time based on the direction of the STA. In this way, an antenna pattern is set among the plurality of APs based on environment information such as the position of the STA, and scheduling is performed, thereby making it possible to reduce the influence of interference occurring among the BSSs. Such communication technique in which the plurality of APs operate in cooperation with each other is called Multi-AP communication. In Multi-AP communication, the APs can be classified into one master AP (to be sometimes referred to as "MAP" hereinafter) that manages all the APs and slave APs (to be sometimes referred to as "SAPs" hereinafter) that operate under the management of the MAP.

In this embodiment, the AP 100 is an AP functioning as the MAP, and communicates with the APs 104 to 106. On the other hand, the APs 104 to 106 can operate as SAPs that communicate with the STAs under the control of the MAP. In one example, the AP 100 is configured to transmit a communication instruction to each of the APs 104 to 106, and the APs 104 to 106 are configured to communicate with the STAs 107 to 109 based on the instruction.

In Multi-AP communication, it is possible to further improve the communication performance by adjusting radio resources when the SAP communicates with the STA. That is, if a frequency channel to be used when each SAP communicates with the STA is decided to execute communication without performing any adjustment, the plurality of SAPs may use the same frequency channel and thus signals transmitted by the SAPs may interfere with each other. Similarly, signals transmitted from one or more STAs to the plurality of SAPs may interfere with each other. Therefore, in this embodiment, interference between the signals is avoided more reliably by using different frequency channels for the respective SAPs, thereby improving the communication performance. According to this, for example, when the plurality of SAPs respectively communicate with the different STAs using cooperative beamforming, even if there exists the STA for which interference cannot be avoided by beamforming, it is possible to avoid the interference by differentiating frequency channels. Furthermore, if one STA communicates with the plurality of SAPs, it is possible to prevent signals transmitted/received by the SAPs from interfering with each other by differentiating frequency channels used by the SAPs. If one STA establishes, with one SAP, a plurality of links using different frequency channels to execute communication, it is possible to perform communication with reduced interference by deciding, by the SAP, the link to be used in accordance with the peripheral environment. On the other hand, the SAP cannot know in advance the peripheral environment such as frequency channels used by other SAPs. Therefore, in this embodiment, the MAP (AP 100) notifies the SAP that joins Multi-AP communication of the frequency channel and the link to be used for a communication instruction. For example, the MAP can include, in a trigger frame for triggering data communication, which is transmitted, at the time of data communication with the STA, to each of the plurality of SAPs to be caused to transmit or receive data simultaneously (at the same time), information indicating the frequency channel and link to be used by each SAP. Thus, when data communication is executed in Multi-AP communication, the appropriate frequency channel/link is used, thereby making it possible to prevent interference from occurring in communication that is performed by each of the plurality of SAPs, and to further improve the performance of Multi-AP communication.

Examples of the arrangement of each communication apparatus for performing such processing and the procedure of the processing will be described below.

### (Arrangement of Communication Apparatus)

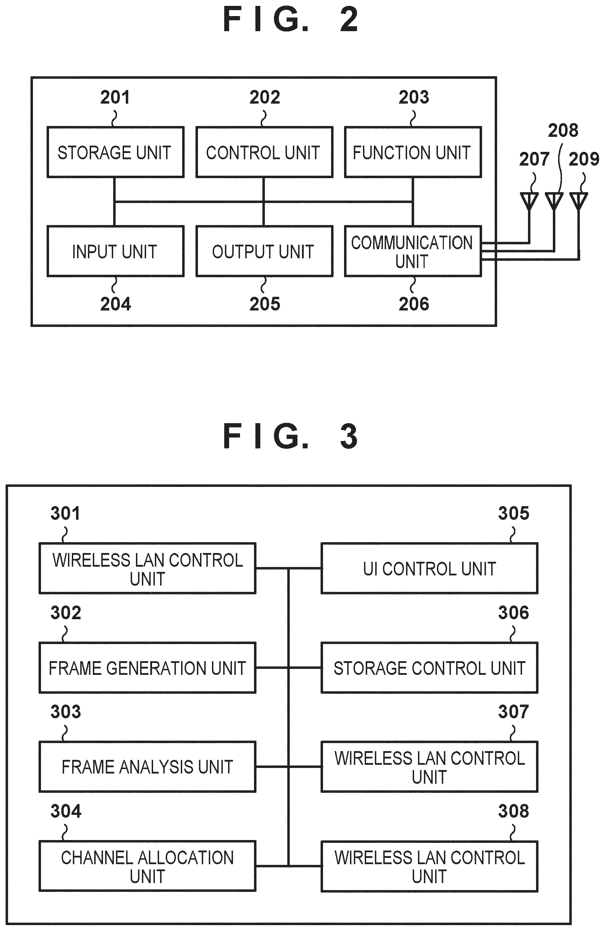

Fig. 2 shows an example of the hardware arrangement of the communication apparatuses (AP and STA) according to this embodiment. Each communication apparatus includes, for example, a storage unit 201, a control unit 202, a function unit 203, an input unit 204, an output unit 205, a communication unit 206, and antennas 207 to 209.

The storage unit 201 is formed by both a ROM and a RAM or one of these, and stores programs configured to perform various kinds of operations to be described later and various kinds of information such as communication parameters for wireless communication. Note that ROM is an acronym for Read Only Memory, and RAM is an acronym for Random Access Memory. As the storage unit 201, not only a memory such as a ROM or a RAM but also a storage medium such as a flexible disk, a hard disk, an optical disk, a magnetooptical disk, a CD-ROM, a CD-R, a magnetic tape, a nonvolatile memory card, or a DVD may be used. The storage unit 201 may include storage devices such as a plurality of memories.

The control unit 202 is formed by, for example, at least one processor such as a CPU or an MPU, an application specific integrated circuit (ASIC), a digital signal processor (DSP), an field programmable gate array (FPGA), or the like. Here, CPU is an acronym for Central Processing Unit, and MPU is an acronym for Micro Processing Unit. The control unit 202 executes programs stored in the storage unit 201, thereby controlling the whole apparatus. Note that the control unit 202 may control the whole apparatus by cooperation of the programs stored in the storage unit 201 and an operating system (OS). The control unit 202 may include a plurality of processors such as a multi-core processor, and control the whole AP 100 by the plurality of processors. The control unit 202 generates data and a signal (radio frame) to be transmitted in communication with another communication apparatus.

Furthermore, the control unit 202 controls the function unit 203 and executes predetermined processing such as image capturing, printing, or projection. The function unit 203 is hardware for the apparatus to execute predetermined processing. For example, if the apparatus is a camera, the function unit 203 is an image capturing unit and performs image capturing processing. For example, if the apparatus is a printer, the function unit 203 is a print unit and performs print processing. Furthermore, for example, if the apparatus is a projector, the function unit 203 is a projection unit and performs projection processing. Data to be processed by the function unit 203 may be data stored in the storage unit 201, or may be data communicated with another AP or STA via the communication unit 206 to be described later.

The input unit 204 accepts various kinds of operations from the user. The output unit 205 performs various kinds of outputs to the user. Here, the output by the output unit 205 includes, for example, at least one of display on a screen, audio output by a loudspeaker, vibration output, and the like. Note that both the input unit 204 and the output unit 205 may be implemented by one module, like a touch panel. Note that each of the input unit 204 and the output unit 205 may be included in the communication apparatus, or may be configured to be connected to the outside of the communication apparatus.

The communication unit 206 controls wireless communication complying with the IEEE802.11 standard series or controls IP communication. The communication unit 206 is a so-called radio chip, which itself may include one or more processors or memories. In this embodiment, the communication unit 206 can execute processing complying with at least the IEEE802.11be standard. In addition, the communication unit 206 controls the antennas 207 to 209 and transmits/receives radio signals for wireless communication. The communication apparatus communicates a content such as image data, document data, or video data with another communication apparatus via the communication unit 206. Each of the antennas 207 to 209 is an antenna configured to transmit/receive a signal in at least one of, for example, the sub-GHz band, the 2.4-GHz band, the 5-GHz band, and the 6-GHz band. Note that the frequency bands to be handled by the antennas 207 to 209 (and a combination thereof) are not particularly limited. Each of the antennas 207 to 209 may be a single antenna or may include a set of two or more antennas to perform Multi-Input and Multi-Output (MIMO) transmission/reception. The antennas 207 to 209 may include two or more antennas (two or more sets of antennas) that are adaptable to different frequency bands. The arrangement in which the communication apparatus includes the plurality of antennas 207 to 209 is merely an example, and the communication apparatus may include only one antenna. Note that the communication unit 206 and the antennas 207 to 209 may be integrated, or may be prepared separately and connected. Furthermore, the communication unit 206 may be prepared for, for example, each antenna and each frequency. For example, the first communication unit combined with the antenna 207, the second communication unit combined with the antenna 208, and the third communication unit combined with the antenna 209 may be prepared.

Note that if the communication apparatus supports the NFC standard or Bluetooth standard in addition to the IEEE802.11 standard series, the communication unit 206 may control wireless communication complying with these communication standards. If the communication apparatus can execute wireless communication complying with each of a plurality of communication standards, it may include the communication unit and the antenna supporting each communication standard.

Fig. 3 is a block diagram of the functional arrangement of the communication apparatuses (AP and STA) according to this embodiment. Each communication apparatus includes, for example, a first wireless LAN control unit 301, a frame generation unit 302, a frame analysis unit 303, a channel allocation unit 304, a UI control unit 305, a storage control unit 306, a second wireless LAN control unit 307, and a third wireless LAN control unit 308. Note that an example in which the communication apparatus includes three wireless LAN control units will be described but the number of wireless LAN control units is not limited to three and may be one, two, or four or more.

Each of the three wireless LAN control units controls wireless LAN communication implemented by antennas and circuits configured to transmit/receive radio signals to/from another wireless LAN communication apparatus. Each wireless LAN control unit can be implemented by, for example, a computer program for controlling wireless LAN communication. Each wireless LAN control unit executes wireless LAN communication control based on a frame generated by the frame generation unit 302 in accordance with the IEEE802.11 standard series. The frame generation unit 302 generates a wireless control frame to be transmitted by one of the wireless LAN control units. The wireless control frame generated by the frame generation unit 302 may be restricted by settings saved in the storage control unit 306. The restriction and contents of the wireless control frame may be changed by user settings from the UI control unit 305.

The frame analysis unit 303 interprets a radio frame received by each wireless LAN control unit and reflects the contents on each wireless LAN control unit. Another wireless LAN control unit that has not received the frame may be controlled via the frame analysis unit 303 by the wireless control frames received by some wireless LAN control units. When communicating with the communication partner (for example, the APs 104 to 106 if the communication apparatus is the AP 100), the channel allocation unit 304 allocates a channel to be used for the communication. Furthermore, when instructing the communication partner (APs 104 to 106) to communicate with another apparatus (for example, the STAs 107 to 109), the channel allocation unit 304 allocates a channel to be used for the communication. For example, the AP 105 and the STA 107 communicate with each other using the channel according to allocation decided by the channel allocation unit 304 of the AP 100 or a sub-channel defined in the channel.

The UI control unit 305 controls hardware associated with a user interface such as a touch panel and buttons used to accept an operation on the communication apparatus by the user (not shown) of the communication apparatus. The UI control unit 305 is implemented by, for example, a program for controlling the hardware. Note that the UI control unit 305 also has a function of presenting information to the user, such as display of an image or the like or audio output. The storage control unit 306 executes control to save, in a ROM and a RAM, data and programs to operate the communication apparatus.

### (Procedure of Processing)

Subsequently, the flow of communication according to this embodiment will be described using some examples. Note that in the following processing examples, the AP 100 can operate as the MAP and the APs 104 to 106 can operate as the SAPs, as described above. The AP 100 executes control to cause the APs 104 to 106 and the STAs 107 to 109 to communicate with each other.

### <Data Transmission>

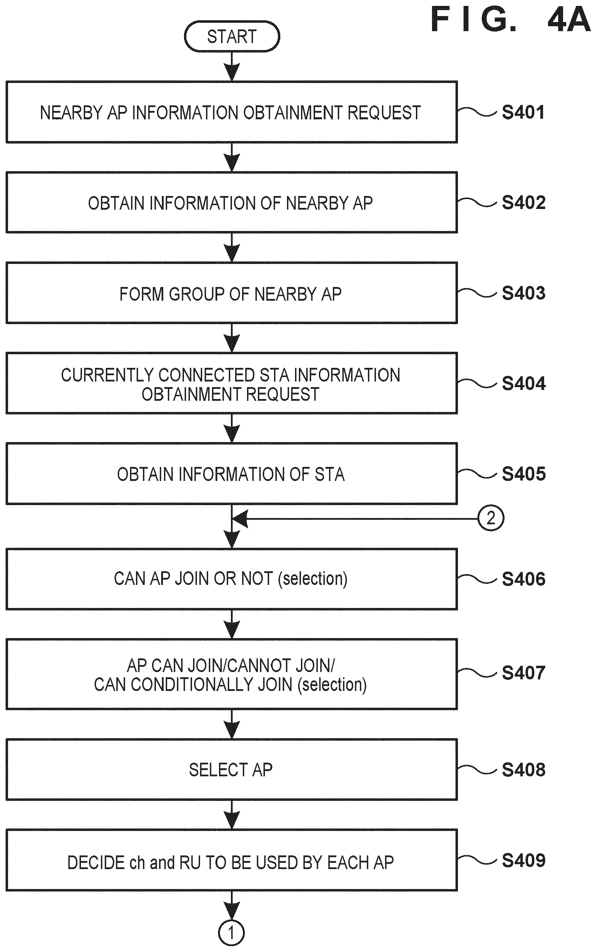

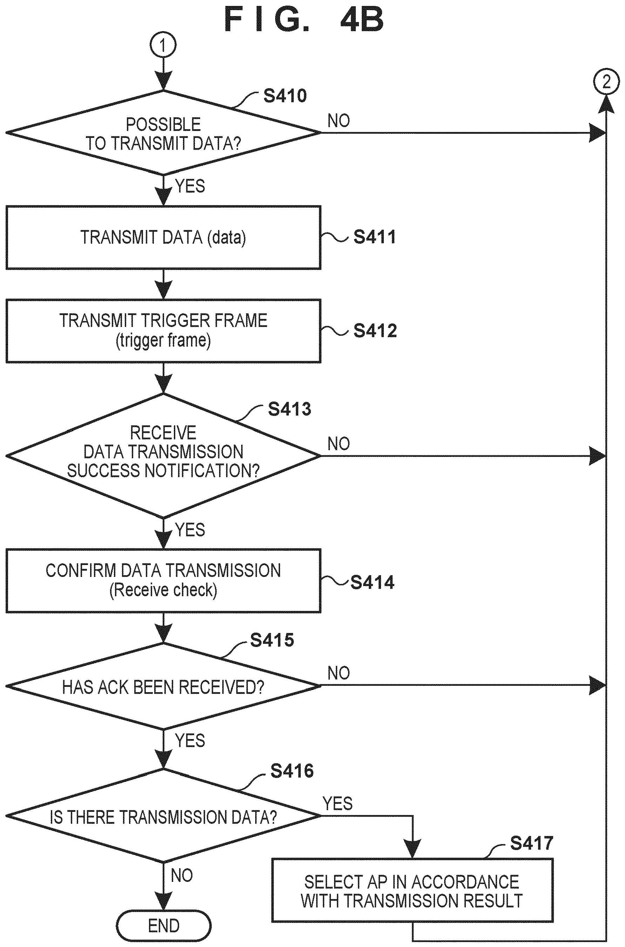

A case in which the AP 100 transmits data to the STA 107 via the APs 104 and 105 will be described with reference to Figs. 4A and 4B. Processing shown in Figs. 4A and 4B is started if, for example, there exists data to be transmitted from the AP 100 to the STA 107. Note that the processing shown in Figs. 4A and 4B may be started when connections between the AP 100 and the APs 104 and 105 and connections between the APs 104 and 105 and the STA 107 are established. Then, when transmitting data from the AP 100 to the STA 107, the processing may be started from processing in step S406 to be described later.

In the processing shown in Figs. 4A and 4B, the AP 100 first sends (broadcasts) an information obtainment request to obtain information of a nearby AP (step S401). The information obtainment request may include information (for example, an identifier) indicating that a response is to be returned if the nearby AP having the same SSID receives this request. The AP 100 obtains the information of the nearby AP by receiving, from the AP, the response to the information obtainment request (step S402). The information obtained in step S402 can include, for example, information of the BSSID of a network formed by the AP, information of a frequency channel usable by the AP, and information indicating whether the AP supports multi-link communication. The information obtained in step S402 may include the received signal strength indicator (RSSI) and signal-to-noise ratio (SNR) of a radio wave sent from the AP 100, the IP address and MAC address of the AP, and the values of HT/VHT/HE/EHT capabilities. The information obtained in step S402 may include information concerning the transmission rate of transmission/reception data, the allowable maximum packet size, the maximum number of connectable STAs, the number of currently connected STAs, the kinds of security standards supported by the AP itself or the currently connected STA, and the like. Furthermore, the information obtained in step S402 may include information concerning the channel used by the currently connected STA, the data transmission/reception speeds from the minimum speed to the maximum speed, and the like.

The AP 100 forms a group for association with the nearby AP based on the information obtained in step S402 (step S403). At this time, the MAP (AP 100) issues an ID for identifying the SAP (at least one of the APs 104, 105, and 106). This ID is handled as an ID equivalent to the AID (Association ID) allocated to the currently connected STA. For example, if the STA 109 is connected to the AP 100, the AP 100 allocates AID = 1 to the STA 109. In this state, if the APs 104 to 106 are the SAPs, AID = 2, AID = 3, and AID = 4 are allocated to the APs 104, 105, and 106, respectively. Note that the method of allocating an ID for identifying each AP is not limited to this. For example, in addition to the AID, an AP ID for association may be allocated. In this case, for example, AP IDs = 1 to 3 are allocated to the APs 104 to 106, respectively. Note that if the AP ID is allocated, the range of the value of the AP ID is set to 1 to 2007. The value of the ID (AID or AP ID) allocated to each AP is transmitted from the AP 100 to the slave AP (at least one of the APs 104 to 106) when, for example, the AP 100 decides to form a group with the SAP in step S403. Note that this notification may be made between steps S405 and S406 to be described later. This allows the slave AP to determine the channel and resource unit allocated to the self-apparatus in a trigger frame to be transmitted later. The MAP (AP 100) may notify each SAP of the allocated ID using, for example, a dedicated frame or an existing frame. Note that the AP ID or the like may be allocated at a different timing. For example, the AP may be allocated with the ID in step S407 to be described later when the AP asserts to join Multi-AP communication, and the AP may be notified of the ID in step S408.

Next, the AP 100 transmits, to the AP included in the formed group, an information obtainment request to request information of the currently connected STA (step S404). This request can include an identifier indicating the request of the information of the STA connected to each AP. This frame need not be a radio frame to be transmitted via a wireless line, and may be a wired frame to be transmitted via a wired line. After that, the AP 100 receives, from the AP of the transmission destination of the request, the information of the STA connected to the AP as a response to the information obtainment request (step S405). This information can include information concerning the MAC address of the STA, the use channel and bandwidth of the STA, whether the STA supports multi-link communication, and the received signal strength indicator (RSSI) and signal-to-noise ratio (SNR) at the time of communication with the STA. This information can include information concerning the IP address of the STA, whether to be operable in a power save mode, the TIM value indicating the reception frequency of the beacon signal, the values of HT/VHT/HE/EHT capabilities, and the transmission rates of transmission/reception data from the minimum rate to the maximum rate. This information may include information concerning the AID allocated to the STA by the AP, the allowable maximum packet size, the kinds of security standards supported by the currently connected STA, and the like. Note that the AP 100 may simultaneously send the information obtainment requests in steps S401 and S404, and simultaneously obtain the pieces of information to be received in steps S402 and S405.

Subsequently, the AP 100 transmits a frame to confirm whether each SAP can perform next data transmission, that is, whether each SAP can join data transmission by Multi-AP communication (step S406). This frame may include information indicating the amount of data to be transmitted and time used for transmission. The AP 100 receives, from each SAP, a response to the inquiry in step S406 (step S407). This response signal can include information indicating whether the SAP can join data transmission. Note that if the SAP can conditionally join data transmission, this response signal may include information indicating a condition for joining. The condition for joining can include information for designating a channel and bandwidth that can be used for data transmission. The AP 100 decides, based on the result received in step S407, the SAP to perform data transmission by Multi-AP communication (step S408). At this time, the AP 100 may transmit a frame to notify the SAP that the SAP has been selected as the AP for data transmission. This embodiment assumes that the APs 104 and 105 join Multi-AP communication. Subsequently, the AP 100 decides a frequency channel to be used by each SAP (step S409). If the SAP executes communication using OFDMA, the AP 100 can decide an RU to be used. Note that decision of the frequency channel and the like in step S409 may be performed simultaneously (at the same time) with decision of the SAP to join Multi-AP communication in step S408.

After deciding the SAP to join Multi-AP communication and the frequency channel and the like to be used by each SAP, the AP 100 determines whether it is possible to transmit data in the state (step S410). If, for example, there is no SAP that can join Multi-AP communication, the AP 100 determines that it is impossible to transmit data from the SAP to the STA. Then, if the AP 100 determines that it is impossible to transmit data (NO in step S410), the data amount and the condition are changed to redo the processing from the processing in step S406. Note that in this case, the AP 100 may directly transmit data to the STA. If the response is received from the SAP in step S407, the AP 100 may perform this determination processing (determination corresponding to step S410). Decision of the frequency channel and the like in step S409 may be performed before the inquiry of whether each AP can join Multi-AP communication in step S406. In this case, the information transmitted from the SAP in step S407 may indicate only whether each AP can join or not. This allows the AP 100 to determine, if data transmission is impossible, allocation of a new channel, and transmit again, to the SAP, a frame to confirm whether the SAP can join. If it is determined that data transmission is possible (YES in step S410), the AP 100 transmits, to the SAP, data whose destination is the STA (step S411). After that, the AP 100 transmits, to the SAP, a trigger frame to cause the SAP to transmit the data to the STA (step S412). In this embodiment, the AP 100 transmits the trigger frame to the APs 104 and 105.

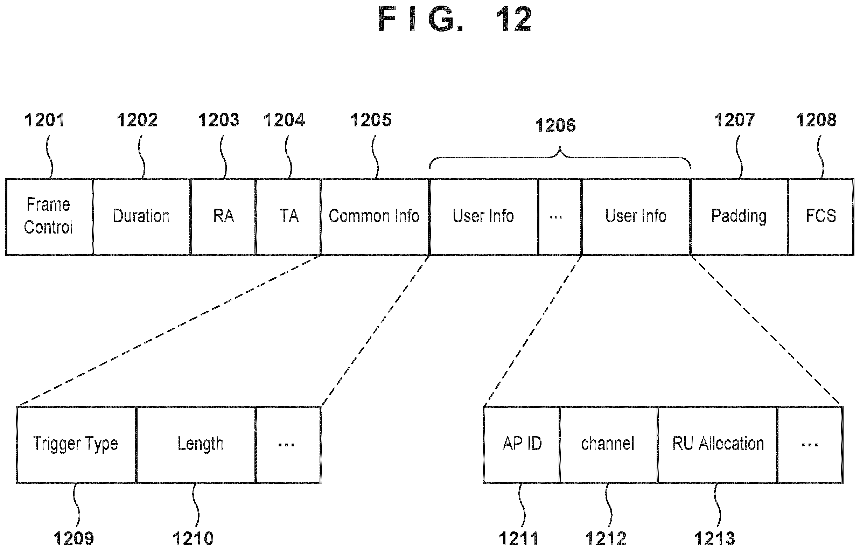

Fig. 12 shows an example of the trigger frame transmitted here. Fields/subfields shown in Fig. 12 comply with a format defined in the IEEE802.11ax standard. That is, the trigger frame includes a Frame Control field 1201, a Duration field 1202, an RA field 1203, a TA field 1204, a Common Info field 1205, a User Info field 1206, a Padding field 1207, and an FCS field 1208. The Common Info field 1205 includes a Trigger Type subfield 1209 and a Length subfield 1210. The Length subfield 1210 indicates a communication period common to all the SAPs. This communication period corresponds to a data amount that can be transmitted/received by each SAP. On the other hand, the Trigger Type subfield 1209 includes 4 bits and designates a trigger type by this trigger frame. Table 1 below exemplifies the correspondence between the value of the Trigger Type subfield 1209 and the trigger type.

**Table 1**

| Subfield Value | Trigger Type |
|---|---|
| 0 | Basic |
| 1 | Beamforming Report Poll (BFRP) |
| 2 | MU-BAR |
| 3 | MU-RTS |
| 4 | Buffer Status Report Poll (BSRP) |
| 5 | GCR MU-BAR |
| 6 | Bandwidth Query Report Poll (BQRP) |
| 7 | NDP Feedback Report Poll (NFRP) |
| 8 | Multi-AP Group Formation Trigger Frame |
| 9 | Multi-AP Data transition |
| 10 | Multi-AP Data receive |
| 11-15 | Reserved |

If the value of the Trigger Type subfield 1209 is set to "9", this indicates that this trigger frame instructs data transmission by Multi-AP communication.

The User Info field 1206 is a field prepared for each SAP. In the trigger frame, User Info fields 1206 the number of which is equal to the number of SAPs are connected and stored. The User Info field 1206 includes, for example, an AP ID subfield 1211, a channel subfield 1212, and an RU Allocation subfield 1213. Table 2 below shows the correspondence between the value of the AP ID subfield 1211 included in the User Info field 1206 and the meaning indicated by the value.

**[Table 2]**

| AP ID Subfield | Contents |
|---|---|
| 0 | Resource unit (RU) is used for random access of connected AP |
| 1 - 2007 | RU is allocated to AP belonging to formed AP group and having same AP ID |
| 2008 - 2044 | Reserved |
| 2045 | RU is used for random access of AP not belonging to formed AP group |
| 2046 | No RU is allocated to AP |
| 2047 - 4094 | Reserved |
| 4095 | Beginning of padding field |

In this embodiment, the AP ID allocated to the SAP by the MAP is stored as the value of the AP ID subfield 1211. Note that the AP ID may be considered to be equivalent to the AID. If the value of the AP ID subfield 1211 falls within the range of "1" to "2007", the value is the value of the allocated AP ID. The remaining values are interpreted as information different from the AP ID, as shown in Table 2.

The channel subfield 1212 included in the User Info field 1206 includes information of the frequency channel to be used by the SAP to transmit data. This information stores, for example, a value corresponding to a channel number defined in the IEEE802.11 standard series. For example, if data is transmitted using channel 6 in the 2.4-GHz band, the value of the channel subfield 1212 is set to "6". Note that as this value, the link number of a link to be used among a plurality of links established between the SAP and the STA may be stored. Both the link number information and the frequency channel information may be included in the channel subfield 1212. For example, if data is to be transmitted from the AP 104 to the STA 107 in link 1, the value can be set to "1". Note that the link number is assigned by the SAP when the SAP and the STA are connected, and given to the STA. Alternatively, the MAP may assign the link number and notify the SAP of it. The channel subfield 1212 is prepared as a 8-bit subfield. The number of bits to be prepared is not limited to this. For example, if the channel is allocated using the link number, the channel subfield 1212 may be prepared as a 3- or 4-bit subfield. Note that if the link number is used here, the SAP can transmit, in step S402 or S405, to the AP 100, information for associating the link number of a specific link with a specific frequency channel via which the specific link is connected. This allows the AP 100 to appropriately assign a channel to be used by the SAP to transmit data. The value stored in the channel subfield 1212 may be a value associated with a frequency band. For example, the 2.4-GHz band, the 5-GHz band, and the 6-GHz band are associated with "1", "2", and "3" in advance, respectively, and then if the use frequency channel is in the 2.4-GHz band, the value of the channel subfield 1212 can be set to "1". In this case, the channel subfield 1212 can be prepared as, for example, a 2-bit subfield.

Information for specifying the tone size and RU of the corresponding SAP is stored in the RU Allocation subfield 1213 included in the User Info field 1206. The RU Allocation subfield 1213 can be prepared as an 8-bit subfield. Table 3 shows an example of the correspondence between the value stored in the RU Allocation subfield 1213 and the allocated RU.

**[Table 3]**

| RU Allocation Subfield | Use Bandwidth | RU size | RU Index |
|---|---|---|---|
| 0 - 8 | 20 MHz, 40 MHz, 80 MHz, 80 + 80 MHz, 160 MHz | 26 | RU 1 to RU 9 |
| 9 - 17 | 40 MHz, 80 MHz, 80 + 80 MHz, 160 MHz | 26 | RU 10 to RU 18 |
| 18 - 36 | 80 MHz, 80 + 80 MHz, 160 MHz | 26 | RU 19 to RU 37 |
| 37 - 40 | 20 MHz, 40 MHz, 80 MHz, 80 + 80 MHz, 160 MHz | 52 | RU 1 to RU 4 |
| 41 - 44 | 40 MHz, 80 MHz, 80 + 80 MHz, 160 MHz | 52 | RU 5 to RU 8 |
| 45 - 52 | 80 MHz, 80 + 80 MHz, 160 MHz | 52 | RU 9 to RU 16 |
| 53, 54 | 20 MHz, 40 MHz, 80 MHz, 80 + 80 MHz, 160 MHz | 106 | RU 1, RU 2 |
| 55, 56 | 40 MHz, 80 MHz, 80 + 80 MHz, 160 MHz | 106 | RU 3, RU 4 |
| 57 - 60 | 80 MHz, 80 + 80 MHz, 160 MHz | 106 | RU 5 to RU 8 |
| 61 | 20 MHz, 40 MHz, 80 MHz, 80 + 80 MHz, 160 MHz | 242 | RU 1 |
| 62 | 40 MHz, 80 MHz, 80 + 80 MHz, 160 MHz | 242 | RU 2 |
| 63, 64 | 80 MHz, 80 + 80 MHz, 160 MHz | 242 | RU 3, RU 4 |
| 65 | 40 MHz, 80 MHz, 80 + 80 MHz, 160 MHz | 484 | RU 1 |
| 66 | 80 MHz, 80 + 80 MHz, 160 MHz | 484 | RU 2 |
| 67 | 80 MHz, 80 + 80 MHz, 160 MHz | 996 | RU 1 |
| 68 | 80 + 80 MHz, 160 MHz | 2*996 | RU 1 |

For example, if the bandwidth of the frequency channel is 20 MHz, and the value of the RU Allocation subfield 1213 is "38", 52 is allocated as the tone size of the sub-channel, and the second RU (RU 2) is allocated to the SAP. According to this expression, even if a bandwidth is different for each frequency channel, the RU can be allocated flexibly.

Note that a plurality of RUs may be allocated to the same SAP. In this case, the User Info fields 1206, the number of which is equal to the number of allocated RUs and in each of which the same value is stored in the AP ID subfield 1211 and a different value is set in at least one of the channel subfield 1212 and the RU Allocation subfield 1213, are set. To allocate a plurality of RUs to one SAP, another expression may be used. For example, a 1-bit Cascaded subfield is prepared after the AP ID subfield 1211. Then, if the bit is set to " 1", a Cascaded subfield, a channel subfield, and an RU Allocation subfield are arranged again after the RU Allocation subfield. On the other hand, if the bit of the Cascaded subfield is set to "0", other subfields different from the Cascaded subfield, the channel subfield, and the RU Allocation subfield are arranged after the RU Allocation subfield. That is, if the Cascaded subfield is set to " 1", another channel subfield and another RU Allocation subfield are set after the channel subfield and the RU Allocation subfield set immediately after the Cascaded subfield. On the other hand, if the Cascaded subfield is set to "0", no other channel subfield or no other RU Allocation subfield is set after the channel subfield and the RU Allocation subfield set immediately after the Cascaded subfield. Note that the Cascaded subfield may be arranged after the channel subfield or the RU Allocation subfield. According to this expression method, if a plurality of RUs are allocated to one SAP, it is possible to designate allocation of the RUs by a smaller number of bit strings.

Note that each of the above-described expression methods is merely an example, and another expression method may be used. In this embodiment, since the frequency channel is simultaneously expressed, the use bandwidth may be limited to a unit of 20 MHz. In this case, since the RU Allocation subfield need only specify 16 RU allocations including 20 MHz in "use bandwidth" in Table 3, a size of 4 bits suffices. By limiting the bandwidth of the frequency channel to 20 MHz, the above-described Cascaded subfield may be used. With the above-described subfield (at least one of the channel subfield 1212 and the RU Allocation subfield 1213), the SAP can know the frequency channel to be used to transmit data to the STA.

Furthermore, for example, it may be defined in advance to allocate the RUs in ascending order of the frequency channel, and the RUs to be allocated may be designated based on the definition. For example, if the size of the RUs to be allocated is limited to 26 in channel 1 in the 2.4-GHz band and channel 36 in the 5-GHz band, each of which has a bandwidth of 40 MHz, values 0 to 17 are allocated to the first to 18th RUs usable in channel 1 in the 2.4-GHz band. Then, values 18 to 36 are allocated to the 19th to 37th RUs usable in channel 36 in the 5-GHz band. For example, if the value "20" is stored in the RU Allocation subfield, the 21st RU is designated in channel 36 in the 5-GHz band. Note that the frame need not include the RU Allocation subfield 1213. For example, the MAP can perform management up to link allocation, and the SAP can manage RU allocation in the allocated link. In this case, it is only necessary to designate the frequency channel or the link number in the trigger frame transmitted in step S412, and it is unnecessary to designate RU allocation. When the SAP receives the trigger frame, it can select whether to transmit data to the STA using the entire band of the designated frequency channel or transmit data by allocating part of the band to another STA. By deciding in advance to perform data communication using the entire band of the designated frequency channel, the SAP need not include a circuit for executing processing of, for example, allocating part of the frequency band, thereby making it possible to simplify the arrangement of the SAP.

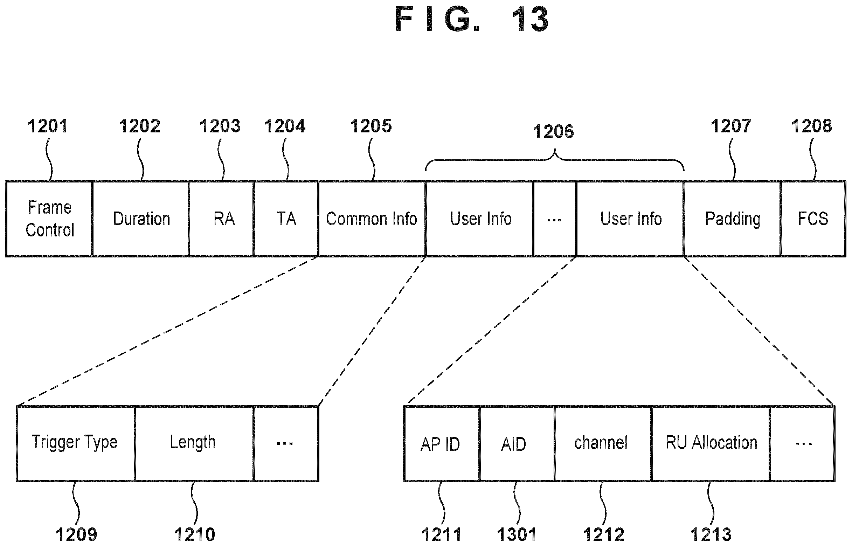

Note that the trigger frame may have a form shown in Fig. 13. That is, in addition to the AP ID subfield 1211, a subfield (AID subfield 1301) for designating an AID indicating the STA with which the SAP is to communicate may be prepared. In this case, at the time of receiving the trigger frame, the SAP can recognize the STA to which data is to be transmitted. This can set the data communication partner flexibly, and it is unnecessary to redo the processing from the processing in step S406 every time data communication is performed. That is, if communication is executed while changing the STA as a communication partner, it is only necessary to repeat the processes in steps S411 to S415 without returning the process to step S406 every time.

Referring back to Fig. 4B, the AP 100 stands by for reception, from the SAP, of a notification indicating whether the SAP was able to transmit data to the STA (step S413). If there exists the SAP that cannot transmit the data correctly (NO in step S413), the AP 100 returns the process to step S406 to redo the processing from selection of the AP. If the AP 100 receives a data transmission success notification from each SAP (YES in step S413), the AP 100 transmits a frame to confirm whether the data is correctly transmitted to the STA (step S414). Then, the AP 100 confirms, based on a frame received as a response to the frame transmitted in step S414, whether all acknowledgments (ACKs) to the data transmitted from the SAPs to the STA are returned (step S415). The ACK to be confirmed is an ACK to the data that can be transmitted from the SAP to the target STA. Therefore, the AP 100 can determine the data that has correctly reached the STA. Note that the ACK may be a block ACK throughout the embodiment. If the AP 100 does not receive the ACK (NO in step S415), the AP 100 can redo the processing from step S406 in consideration of transmission of data from another AP. Note that in this case, the AP 100 may repeat the processing from transmission (step S412) of the trigger frame for retransmission of the data. The AP 100 may stand by until it confirms that all the data are transmitted correctly. If the SAP can transmit the data to the STA correctly without transmitting the frame by the AP 100 in step S414, an ACK may be transmitted to the AP 100. That is, step S414 may be omitted. In this case, the AP 100 stands by for ACKs for a predetermined period after transmission of the trigger frame. If not all the ACKs to the transmitted data are received within the predetermined period, the AP 100 may redo the processing from step S406. In this case, the AP 100 may adjust selection of the SAP in step S408 in consideration of the use channel and the SAP that can transmit the data to the STA correctly. For example, if only some of the SAPs have successfully transmitted the data, the AP 100 may select the SAPs that have successfully transmitted the data. Furthermore, if data transmission succeeds only in a given frequency channel, the AP 100 may allocate only the frequency channel in step S409.

If the AP 100 confirms that data transmission succeeds (YES in step S415), the AP 100 confirms whether data to be transmitted remains (step S416). If data to be transmitted remains (YES in step S416), the AP 100 selects a frequency channel and an AP to be used to transmit the remaining data in consideration of information concerning a transmission result such as the SAP that has successfully transmitted the data and the frequency channel (step S417). For example, if the processing is executed again from step S406, the AP 100 can transmit, to an AP that has successfully transmitted the data last time, a frame to confirm whether the AP can join. At this time, in the above-described AP selection method, a method that considers a communication result may be used, or an AP may be selected only based on the communication result regardless of the above-described AP selection method. If it is determined that no data to be transmitted remains (NO in step S416), the AP 100 ends the processing.

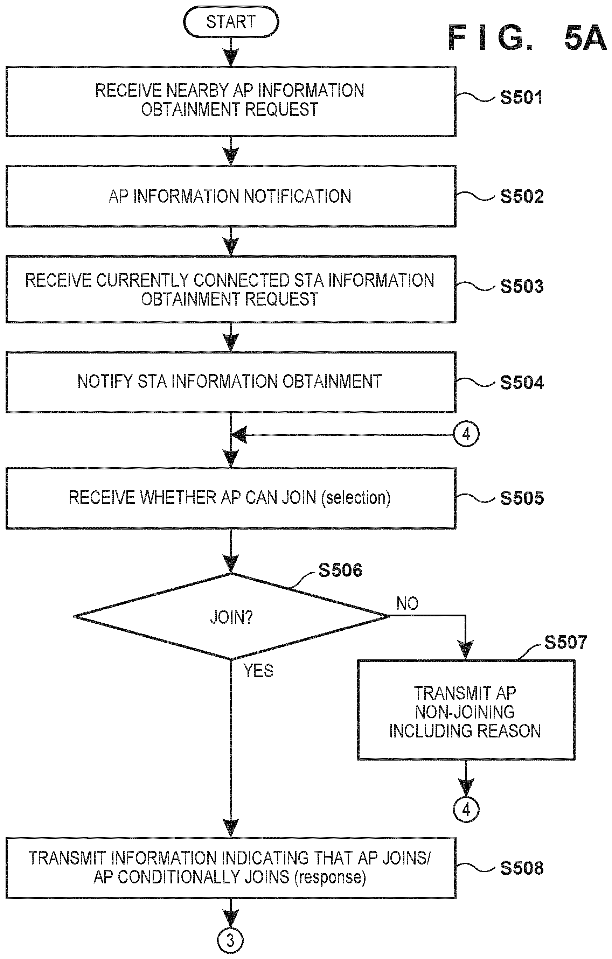

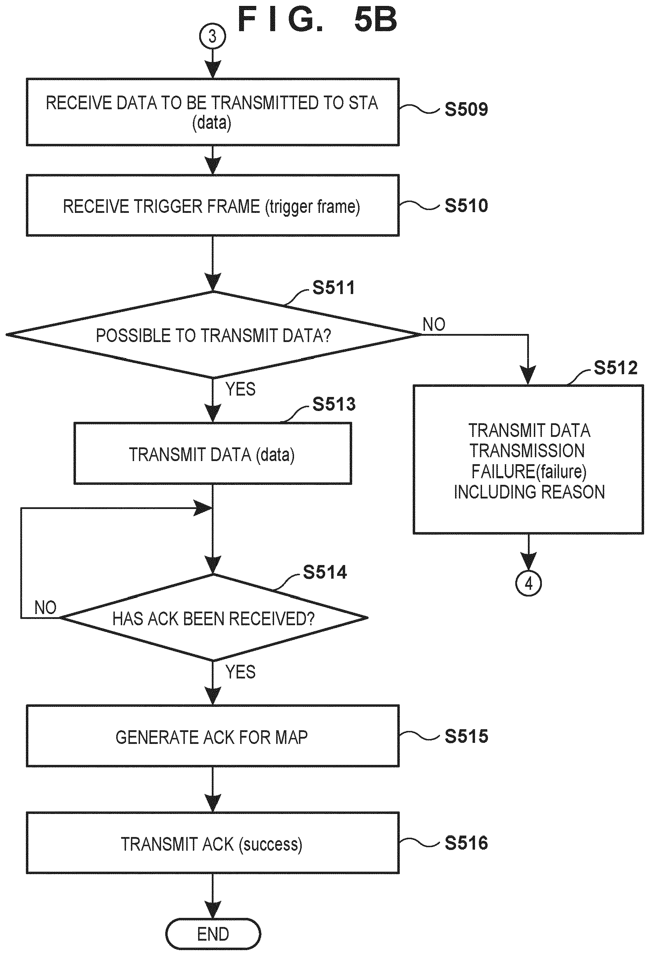

Subsequently, an example of the procedure of processing when the SAPs (APs 104 and 105) transmit data to the STA (STA 107) in cooperation with each other will be described with reference to Figs. 5A and 5B. Note that the SAPs (APs 104 and 105) start the following processing in response to reception of an information obtainment request of a nearby AP from the AP 100.

If each of the APs 104 and 105 receives, from the AP 100, an information obtainment request to request obtainment of information of a nearby AP (step S501), it transmits, to the AP 100, a response to the request (step S502). If each of the APs 104 and 105 receives, from the AP 100, an information obtainment request to request obtainment of information of a currently connected STA (step S503), it sends a response by including the information of the currently connected STA (step S504). Note that the information transmitted/received in steps S501 to S504 is as described with reference to Fig. 4A and a description thereof will be omitted. Next, each of the APs 104 and 105 receives, from the AP 100, a frame to confirm whether to join data transmission for preparation of data transmission to the STA 107 (step S505). Upon receiving the frame, each of the APs 104 and 105 decides, based on the current communication status of the self-apparatus, whether to join data transmission (step S506).

If each of the APs 104 and 105 does not join data transmission (NO in step S506), it transmits, to the AP 100, a frame indicating that it does not join data communication (step S507). Note that in this case, each of the APs 104 and 105 transmits the frame by including information (REASON) indicating the reason for not joining data communication. For example, each of the APs 104 and 105 currently executes data communication with a different STA, has insufficient resources such as radio resources or the load of a communication processing function, and may determine that it is impossible to execute data communication with the target STA 107. In this case, each of the APs 104 and 105 generates a frame including REASON = BUSY, and transmits it to the AP 100. Note that if each of the APs 104 and 105 determines not to join data transmission since the connection to the STA 107 is disconnected, the AP may generate a frame including REASON = DISCONNECTED, and transmit it to the AP 100. Even if, for example, the resources are sufficient, if each of the APs 104 and 105 currently executes communication to be protected, it may generate a frame by setting the state in REASON and transmit the frame. If each of the APs 104 and 105 determines that it can join data transmission (YES in step S506), it generates a frame including a frequency channel or link number usable when joining data transmission, and transmits the frame to the AP 100 (step S508). Note that if each of the APs 104 and 105 can join without imposing any condition on a usable frequency resource or link number, the AP may transmit, to the AP 100, a frame indicating that the AP can join unconditionally without including information such as the frequency channel. If each of the APs 104 and 105 is selected, by the AP 100, as an SAP to transmit data to the STA 107, it receives, from the AP 100, the data to be transmitted to the STA 107 (step S509). At this time, each of the APs 104 and 105 may transmit an ACK to the AP 100 based on the received data. After that, each of the APs 104 and 105 receives a trigger frame indicating the timing of data transmission to the STA 107 (step S510). The trigger frame includes an AID allocated to each of the APs 104 and 105, and includes information indicating the frequency channel or link to be used (in some cases, information indicating RU allocation) in correspondence with each AID. This allows each of the APs 104 and 105 to recognize that it should transmit the data using the frequency channel or RU designated by the trigger frame. Immediately after receiving the trigger frame, each of the APs 104 and 105 confirms whether the self-apparatus can transmit a frame (step S511). If, for example, another communication apparatus transmits a radio wave using the frequency channel and RU designated by the trigger frame, or in an adverse communication environment such as a low SNR environment, each of the APs 104 and 105 can determine that it cannot transmit data (NO in step S511). In this case, each of the APs 104 and 105 transmits a frame indicating the failure of data transmission to the AP 100 (step S512). In this case, the frame to be transmitted includes information (REASON) indicating the reason for the failure of data transmission, and an identifier meaning AIR BUSY can be stored in REASON. If data transmission fails, each of the APs 104 and 105 returns the process to step S505. On the other hand, if it is determined that the self-apparatus can transmit the frame immediately after receiving the trigger frame (YES in step S511), each of the APs 104 and 105 transmits, to the STA 107, the data received in step S509 (step S513). Then, each of the APs 104 and 105 stands by for reception of an ACK from the STA 107 (step S514). If the ACK is received (YES in step S514), each of the APs 104 and 105 additionally generates an ACK to be transmitted to the AP 100 (step S515), and transmits the ACK to the AP 100 (step S516). Note that if each of the APs 104 and 105 receives, from the AP 100, a frame to confirm data transmission, it can transmit, to the AP 100, an ACK for the data for which the ACK has been received at this time (step S516). The APs 104 and 105 end the processing based on confirmation of the success of transmission of all the data performed by receiving the ACKs from the STA 107. Note that if no ACK has been received from the STA 107 within a predetermined time (NO in step S514), each of the APs 104 and 105 may notify the AP 100 of it, thereby ending the processing.

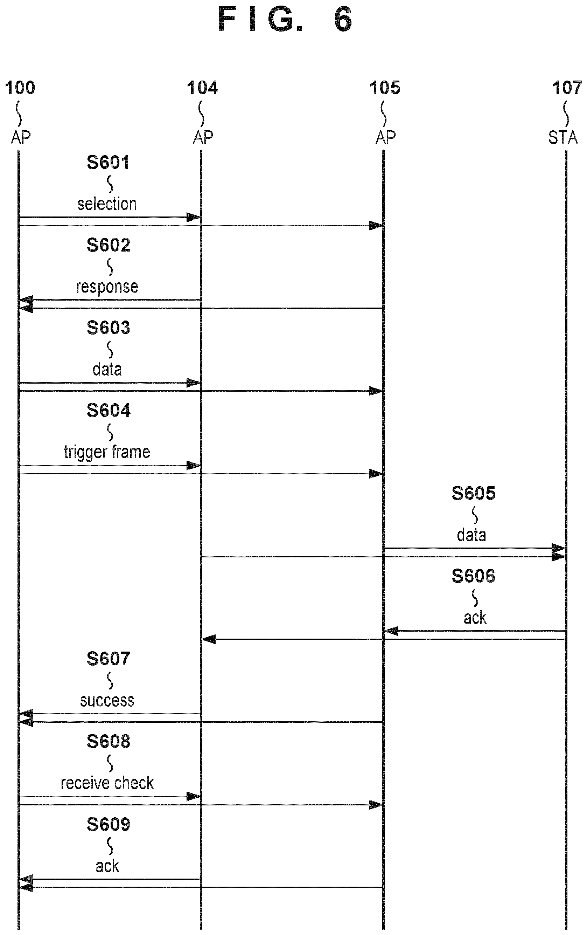

Fig. 6 shows an example of the procedure of processing when the MAP (AP 100) transmits data to the STA 107 via the SAPs (APs 104 and 105). Note that the processing shown in Fig. 6 corresponds to the processes in step S406 and the subsequent steps of Figs. 4A and 4B and the processes in step S505 and the subsequent steps of Figs. 5A and 5B.

First, the AP 100 transmits, to each of the APs (APs 104 and 105) that exist on the periphery of the self-apparatus and are currently connected to the STA 107, a frame to confirm whether to join data transmission to the STA 107 (S601). Each of the APs 104 and 105 transmits, to the AP 100, a response frame to the frame (S602). This response frame includes information indicating whether to join data transmission. Note that if each AP can join data transmission, the response frame may include information about the usable frequency channel or link. On the other hand, if each of the APs 104 and 105 cannot join data transmission, the response frame includes, for example, a reason for not joining. Examples of the reason for not joining are BUSY and DISCONNECTED. The AP 100 selects, based on the response frame, the APs that join data transmission as the SAPs, and transmits, to each of the selected APs (APs 104 and 105), data to be transmitted to the STA 107 (S603). At this time, the SAPs (APs 104 and 105) directly transmit the data to the STA 107. Therefore, for example, after a predetermined period for preparing data transmission, the AP 100 transmits a trigger frame indicating the timing of data transmission to each of the APs 104 and 105 (S604). Upon receiving the trigger frame, each of the APs 104 and 105 transmits the data to the STA 107 using the frequency channel or link and the RU designated by the trigger frame (S605). Then, upon receiving the data, the STA 107 transmits an ACK to each of the APs 104 and 105 as the transmission source (S606). If each of the APs 104 and 105 determines, by receiving the ACK, that data transmission succeeds, it transmits a frame indicating the success of data transmission to the AP 100 (S607). Note that if the APs 104 and 105 do not receive all ACKs or a predetermined time elapses, the AP 100 transmits, to each of the APs 104 and 105, a message to confirm whether transmission of all the data succeeds (S608). Note that if data for which no ACK has been received exists in only one of the APs 104 and 105, this message may be transmitted to only the AP. If each of the APs 104 and 105 receives this message, it returns, to the AP 100, an ACK indicating a current reception status (S609). In S607, each of the APs 104 and 105 may transmit a transmission failure notification (Failure) to the AP 100.

In this way, the APs 104 and 105 can communicate with the STA using the frequency channel or link instructed from the AP 100. Thus, for example, if the plurality of links (links 110 and 111) are connected between the AP 105 and the STA 107, the appropriate channel can be selected to transmit the data from the AP 100 to the STA 107 via the AP 105. In addition, each of the APs 104 and 105 can use the frequency channel that reduces interference, thereby improving the communication performance.

Note that the data to be transmitted is not limited to the data transmitted from the AP 100, and may be data held in advance in each of the APs 104 and 105. The data held in each of the APs 104 and 105 can be data obtained from a server on a network connected to the STA 107 via each of the APs 104 and 105. In this case, the information transmitted from each of the APs 104 and 105 in S602 of Fig. 6 can include, for example, the buffer amount of the data destined for the STA 107. In this case, S603 of Fig. 6 is omitted. For example, the AP 104 may transmit the data from the AP 100 to the STA 107, and the AP 105 may transmit the held data to the STA 107. In this case, in S603, the AP 100 can transmit the transmission target data to only the AP 104. For example, at least one of the APs 104 and 105 may obtain the data without intervention of the AP 100, and transmit the data held in the transmission buffer and the data received from the AP 100 using different frequency channels, links, and RUs. In this case, the AP 100 can transmit the transmission target data to each of the APs 104 and 105, and designate, in the trigger frame, the frequency channels and the like to be used to transmit the data and the data held in each AP. Note that the frequency channel and the like to be used may be associated with each data. That is, the frequency channel and the like to be used may be designated for each data. For example, the first link is used for the data from the AP 100 and the second link is used for the data held in the AP 104 or 105. Instead of such designation, each of the APs 104 and 105 may be notified of the frequency channels, links, RUs, and the like of the amount sufficient for transmitting the data from the AP 100 and the data held in each of the APs 104 and 105.

### <Data Reception>

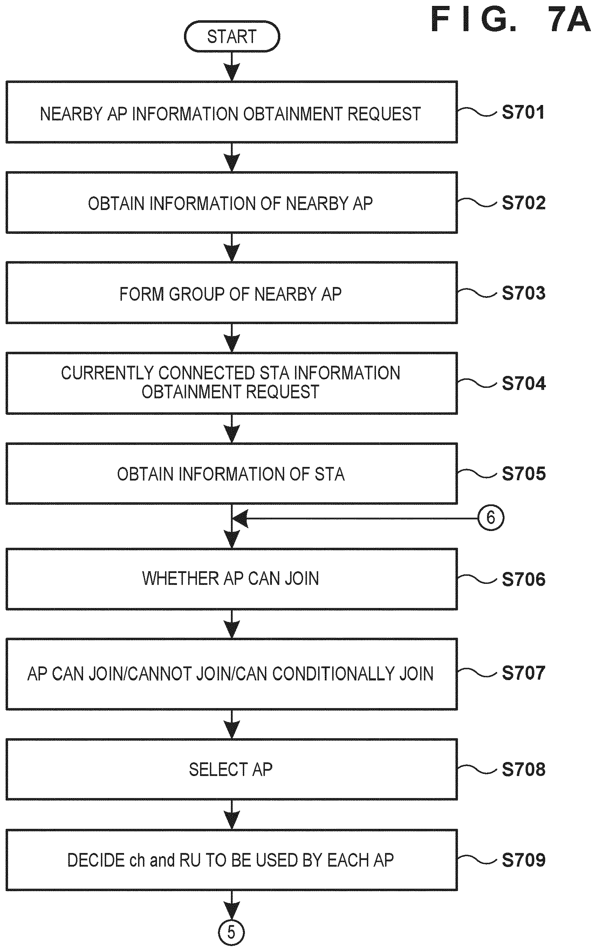

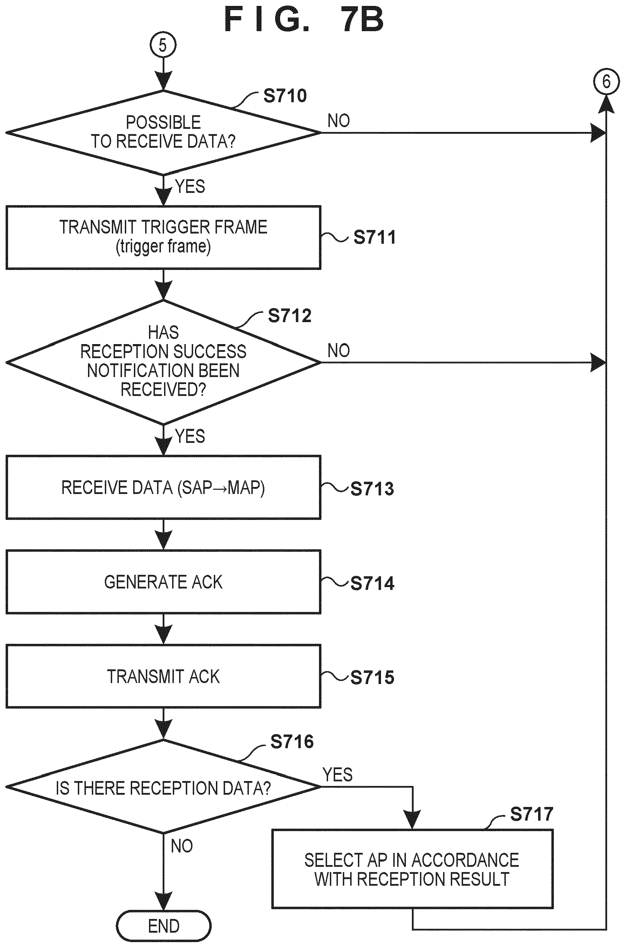

The procedure of processing when the AP 100 operates as the MAP to receive data from the STA 107 via the APs 104 and 105 operating as the SAPs will be described. First, processing executed by the AP 100 will be described with reference to Figs. 7A and 7B. This processing is started if there exists data to be transmitted by the STA 107 to the AP 100. Note that this processing is started when connections between the AP 100 and the APs 104 and 105 and connections between the APs 104 and 105 and the STA 107 are established, and the AP 100 may execute processes in step S706 and subsequent steps to be described later when receiving data. In the following description, a description of the same parts as in the processing example of data transmission will be simplified or omitted.

Steps S701 to S705 are the same as steps S401 to S405 in processing example 1. Then, the AP 100 transmits a frame to confirm whether each AP can perform next data reception (step S706). This frame may include information such as a data amount and a time used for transmission. Furthermore, if the AP 100 allocates an AID to the STA, information for associating the MAC address of the STA with the AID allocated by the AP 100 may be transmitted to each AP. Next, the AP 100 receives, from each AP, a response to the frame in step S706 (step S707). This frame can include information indicating whether each AP can join data reception, and includes, if each AP can join, a condition for joining. The condition for joining can include, for example, information for designating a frequency channel and bandwidth usable for data reception. If each AP different from the AP 100 allocates an AID to the STA, information for associating the MAC address of the STA with the AID allocated to the STA by the AP may be transmitted to the AP 100.

The AP 100 decides, based on the information received in step S707, the SAP that is to receive the data from the STA 107 (step S708). At this time, the AP 100 may transmit, to the selected SAP, a frame to notify the SAP that it has been selected as an AP that is to receive the data. In this embodiment, the APs 104 and 105 are selected as the SAPs.

Next, the AP 100 decides the frequency channel or link to be used by each SAP (step S709). If each SAP executes communication using OFDMA, the AP 100 decides an RU to be used to receive the data from the STA 107. Note that the processes in steps S708 and S709 may be performed at the same time.

If the SAPs that join data reception and the frequency channel and RU to be used by each SAP are decided, the AP 100 determines whether data reception is possible in the state (step S710). For example, if there is no SAP that can join data reception, the SAP cannot receive the data from the STA, and the AP 100 thus determines that data reception is impossible (NO in step S710). In this case, the AP 100 can redo the processing from step S706 by changing the data amount and the condition. The AP 100 may decide to directly receive the data from the STA in this case. Note that upon receiving the response from each AP on the periphery in step S707, the AP 100 may perform the determination processing in step S710. The processing in step S709 may be executed before the processing in step S706 is executed. In this case, the information transmitted by each AP on the periphery of the AP 100 in step S707 may indicate only whether to join data reception. This allows the AP 100 to immediately determine new channel allocation and transmit, to each AP, a frame to confirm whether to join.

If data can be received (YES in step S710), the AP 100 transmits, to each of the SAPs (APs 104 and 105), a frame serving as a trigger for causing the STA 107 or each SAP to transmit the data (step S711). The trigger frame has, for example, the structure shown in Fig. 13. The fields 1201 to 1213 are the same as in Fig. 12. However, if the value of the Trigger Type subfield 1209 is set to "10", this trigger frame instructs data reception by Multi-AP communication. In the structure shown in Fig. 13, the AID subfield 1301 is provided in the User Info field 1206. In the AID subfield 1301, an AID (Association ID) assigned by the AP at the time of connection to the STA is set. Table 4 below shows the correspondence between the value of the AID subfield 1301 in the User Info field 1206 and its meaning.

**Table 4**

| AUS Subfield | Contents |
|---|---|
| 0 | Resource unit (RU) is used for random access of connected STA |
| 1 - 2007 | RU is allocated to STA having same AID among currently connected STAs |
| 2008 - 2044 | Reserved |
| 2045 | RU is used for random access of STA currently not connected |
| 2046 | No RU is allocated to STA |
| 2047 - 4094 | Reserved |
| 4095 | Beginning of padding field |

In this embodiment, as the value of the AID subfield 1301, an AID allocated to the currently connected STA is set. Note that the AID may be assigned by the MAP to each STA. If the value of the AID subfield 1301 is set to "1" to "2007", the value is the value of the AID allocated to the STA. If another value is set, reference is made to Table 4.

If each SAP (each of the APs 104 and 105) can receive the data from the STA 107 in accordance with the trigger frame, the SAP transmits, to the AP 100, a notification indicating the success of data reception. This frame includes information indicating whether the SAP successfully receives the data. Note that this frame may be transmitted only if the SAP fails to receive the data. With this notification, the AP 100 can determine whether the SAP successfully receives the data (step S712). Then, if the AP 100 determines that the SAP successfully receives the data (YES in step S712), the AP 100 receives, from the SAP, the data transmitted by the STA 107 (step S713). Note that if no data is received in step S713 before the predetermined period elapses after transmission of the trigger frame in step S711 without receiving the notification, the AP 100 may determine that the SAP fails to receive the data. That is, the processing in step S712 may be performed regardless of the notification from the SAP. If neither the success/failure notification of data reception nor the data in step S713 is received even after the predetermined time, the AP 100 may determine that the SAP fails to receive the data. If the AP 100 determines that the SAP fails to receive the data, the process can return to step S706.

If the AP 100 receives, in step S713, the data received by the SAP from the STA 107, and the data reception succeeds, the AP 100 generates an ACK associated with the data (step S714). Then, the AP 100 transmits the generated ACK to the SAP (step S715). Then, the AP 100 determines whether there exists data to be received (step S716). If, for example, a buffer amount indicating that data to be transmitted by the STA 107 still remains is indicated in the data received via the SAP, the AP 100 determines that there exists data to be received (YES in step S716). In this case, for example, based on information concerning the reception result such as the SAP used when data reception succeeds, the AP 100 can select the AP to be used as the SAP in subsequent data reception processing (step S717). For example, if the processing is re-executed from step S706, the AP 100 can transmit, to only the AP that has successfully received the data last time, a frame to confirm whether the AP can join. If there exists no data to be received (NO in step S716), the AP 100 ends the processing.

Note that when the AP 100 receives the data from each SAP in step S713, OFDMA may be used. That is, the AP 100 can transmit the trigger frame to each SAP, and the data can be transmitted from the SAP to the AP 100 based on the trigger frame. If it is determined in step S716 that there exists data to be received, the processing may be restarted from step S711. Thus, the overhead for the processes in steps S706 to S710 can be eliminated, thereby implementing communication with higher throughput.

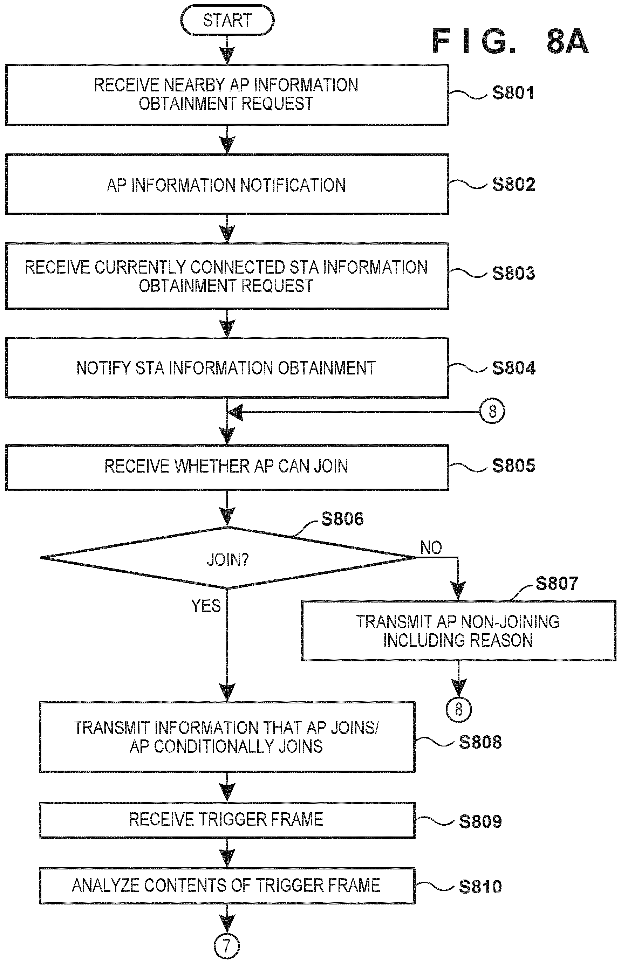

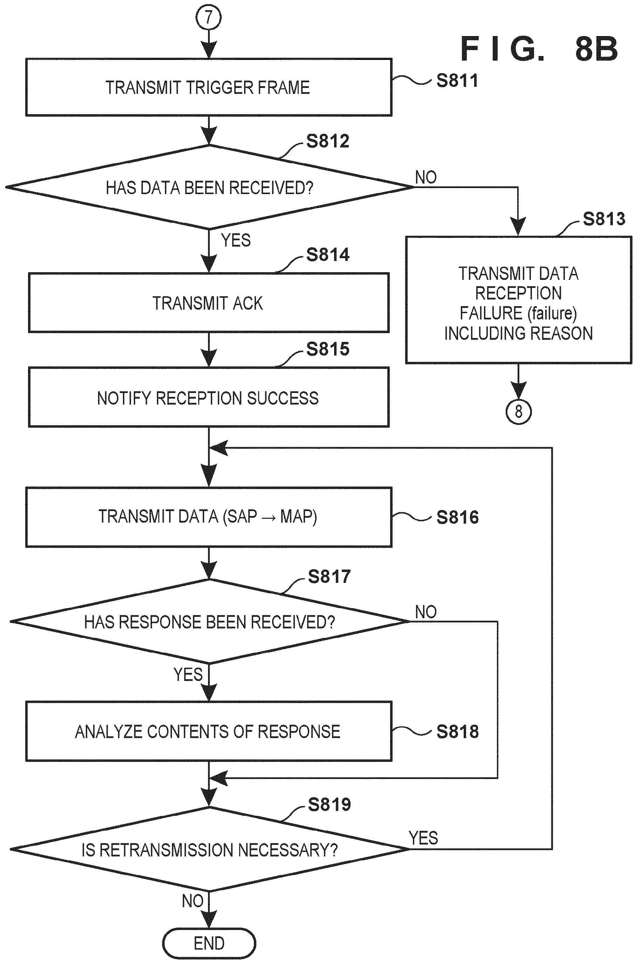

Figs. 8A and 8B show an example of the procedure of processing when the APs 104 and 105 receive data from the STA 107 in cooperation with each other. Note that information included in each frame is the same as in Figs. 5A and 5B and a description thereof will be omitted. This processing is started when each of the APs 104 and 105 receives an information obtainment request of a nearby AP from the AP 100. Processes in steps S801 to S804 are the same as those in steps S501 to S504 of Fig. 5A and a description thereof will be omitted.

Each of the APs 104 and 105 receives, from the AP 100, a frame to confirm whether to join data transmission for preparation for data reception from the STA 107 (step S805). If each of the APs 104 and 105 does not join data reception (NO in step S806), the AP transmits, to the AP 100, a frame indicating that the AP does not join data communication (step S807). Note that at this time, similar to step S507, each of the APs 104 and 105 can transmit a frame by including information (REASON) indicating the reason for not joining data communication. If each of the APs 104 and 105 determines that it can join data transmission (YES in step S806), the AP generates a frame including a frequency channel or link number usable when joining data reception, and transmits the frame to the AP 100 (step S808). Note that if each of the APs 104 and 105 can join without imposing any condition on a usable frequency resource or link number, the AP may transmit, to the AP 100, a frame indicating that the AP can join unconditionally, without including information of the frequency channel or the like.

If each of the APs 104 and 105 is selected, by the AP 100, as the SAP to receive data from the STA 107, the AP receives, from the AP 100, a trigger frame indicating a timing of receiving the data from the STA 107 (step S809). The structure of the trigger frame received at this time is as shown in, for example, Fig. 13. The trigger frame includes an AID (AP ID) allocated to each of the APs 104 and 105 and information of frequency channel and RU allocation corresponding to the AID. Each of the APs 104 and 105 can recognize that it should transmit the data using the frequency channel and RU designated by the trigger frame. By analyzing the trigger frame, each of the APs 104 and 105 can specify the frequency channel (or link number) and RU that should be used to receive the data (step S810). If, for example, the channel subfield is "5" and the RU subfield is "2", the AP 104 or 105 recognizes to allocate the second RU (RU 2) in channel 5 to the STA 107. Note that the trigger frame may be configured to designate only the frequency channel or link number. In this case, if, for example, "channel 5" is allocated, the AP 104 or 105 may freely allocate an RU in channel 5. For example, assume that the AP 104 communicates with the STA 109 in addition to the STA 107, and is to receive data from the STA 109. In this case, the AP 104 may allocate RUs to the STAs 107 and 109 within the range of the allocated frequency channel, thereby causing the STAs to execute data transmission using the RUs.

Each of the APs 104 and 105 transmits a trigger frame to the STA 107 using the frequency channel or link number designated by the trigger frame received from the AP 100 (step S811). Each of the APs 104 and 105 receives the data from the STA 107 based on the trigger frame. Each of the APs 104 and 105 determines whether data reception succeeds (step S812). If data reception does not succeed (NO in step S812), the AP notifies the AP 100 that data reception fails (step S813). Note that each of the APs 104 and 105 can transmit, to the AP 100, data including information (REASON) indicating a reason for the failure of data reception. Each of the APs 104 and 105 returns the process to step S805. On the other hand, if data reception succeeds (YES in step S812), each of the APs 104 and 105 returns an ACK associated with the data to the STA 107 (step S814). Then, each of the APs 104 and 105 transmits, to the AP 100, a frame indicating that the data has been received correctly (step S815). Note that transmission of this frame may be omitted. Then, each of the APs 104 and 105 transmits the received data to the AP 100 (step S816). Each of the APs 104 and 105 confirms whether a response is received from the AP 100 (step S817). If a response is received (YES in step S817), the AP analyzes contents of the response (step S818). Then, each of the APs 104 and 105 determines, based on the response, whether retransmission is necessary (step S819). For example, if the response is a negative acknowledgement, each of the APs 104 and 105 determines that retransmission is necessary (YES in step S819). If the response is an acknowledgement, each of the APs 104 and 105 determines that retransmission is unnecessary (NO instep S819). Furthermore, if each of the APs 104 and 105 does not receive the response from the AP 100 for a predetermined period after data transmission (NO in step S817), the AP may determine that retransmission is necessary. If each of the APs 104 and 105 determines that retransmission is unnecessary (NO in step S819), the process ends.

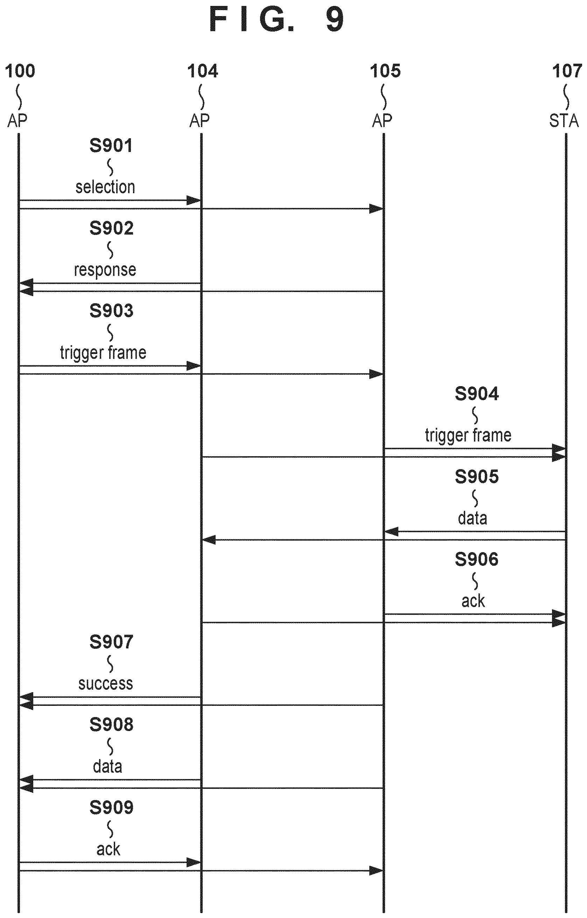

Fig. 9 shows an example of the procedure of processing when the MAP (AP 100) transmits data from the STA 107 via the SAPs (APs 104 and 105). Note that the processing shown in Fig. 9 corresponds to the processes in step S706 and the subsequent steps of Figs. 7A and 7B and the processes in step S805 and the subsequent steps of Figs. 8A and 8B.

First, the AP 100 transmits, to each AP (each of the APs 104 and 105) that exists on the periphery of the self-apparatus and is currently connected to the STA 107, a frame to confirm whether to join data reception from the STA 107 (S901). Each of the APs 104 and 105 transmits, to the AP 100, a response frame to the frame (S902). This response frame includes information indicating whether to join data reception. Note that if each AP can join data reception, the response frame may include information about the usable frequency channel or link. On the other hand, if each of the APs 104 and 105 cannot join data reception, the response frame includes, for example, a reason for not joining such as BUSY or DISCONNECTED, as described above. The AP 100 selects, based on the response frames, as the SAPs, the APs that join data reception, and transmits, to each of the selected APs (APs 104 and 105), a trigger frame for triggering data reception from the STA 107 (S903). Upon receiving the trigger frame, each of the APs 104 and 105 interprets contents of the trigger frame to specify the frequency channel or link number and the RU allocated to the self-apparatus. Then, each of the APs 104 and 105 transmits, to the STA 107, a trigger frame for receiving the data from the STA 107 (S904). Upon receiving the trigger frame, the STA 107 transmits the data to the AP (AP 104 or 105) as the transmission source of the trigger frame (S905). Upon receiving the data from the STA 107, each of the APs 104 and 105 returns an ACK associated with the received data to the STA 107 (S906). If each of the APs 104 and 105 can receive all the data from the STA 107, it transmits, to the AP 100, a frame indicating completion of data reception (S907). Then, each of the APs 104 and 105 transfers, to the AP 100, the data received from the STA 107 (S908). Note that the AP 100 may transmit, to each of the APs 104 and 105, a TF for transmitting the data by the AP. Upon receiving the data, the AP 100 transmits an ACK to the AP (AP 104 or 105) as the transmission source of the data (S909).

As described above, each of the APs 104 and 105 can communicate with the STA 107 using the frequency channel or link instructed from the AP 100. Note that the case in which the data is transmitted from the STA 107 to the AP 100 has been described above but the present invention is not limited to this. For example, at the time of data transmission from the STA 107 to the AP 104 or 105, the AP 100 may designate the frequency channel or link number. In this case, the information transmitted from the AP 104 (AP 105) in S902 of Fig. 9 may include, for example, the buffer amount of the data transmitted by the STA 107. For example, the AP 104 may transfer the data from the STA 107 to the AP 100, and the AP 105 may receive, as data destined for the self-apparatus, the data transmitted from the STA 107. In this case, the data transferred from each SAP to the MAP in S908 is only the data from the AP 104 to the AP 100, and data transfer from the AP 105 to the AP 100 is not performed. Along with this, the ACK transmitted in S909 is transmitted from the AP 100 to only the AP 104, and is not transmitted to the AP 105. Furthermore, if each of the APs 104 and 105 establishes a plurality of links with the STA 107, and the AP 100 designates the plurality of links, communication with the STA 107 for the AP 100 can be executed using some of the links.

Note that if an AP communicates with a plurality of STAs, for example, the AID of one STA is stored in the AID subfield 1301 of the User Info field of the frame structure shown in Fig. 13, and thus a different User Info field is set for each STA. A frequency channel or link number and RU allocation are designated for each STA. Note that the same frequency channel or link number may be designated for a plurality of AIDs. In this case, upon receiving this trigger frame, the AP can execute allocation of an RU and the like within the range of resources designated for each STA in the self-apparatus. The User Info field may be set for each STA or one User Info field may be set for a plurality of STAs. For example, information indicating that information concerning the plurality of STAs is included may be prepared, and information concerning the plurality of AIDs may be designated. For example, information for designating the number of STAs may be included between the AP ID subfield 1211 and the AID subfield 1301. In this case, after the AID subfield 1301, the channel subfield 1212, and the RU Allocation subfield 1213 for the first STA, the AID subfield 1301, the channel subfield 1212, and the RU Allocation subfield 1213 for the second STA can be set. After the AID subfields 1301 for the plurality of STAs are successively set, the channel subfield 1212 and the RU Allocation subfield 1213 for each of the STAs may be set. A subfield such as the above-described Cascaded subfield may be provided without using the information for designating the number of STAs.

Note that the case in which the AP 100 transmits the trigger frame of the radio signal to each of the APs 104 and 105 in the above-described data transmission/reception has been described but the AP 100 may transmit a frame corresponding to the trigger frame by a wired signal. Similarly, communication between the AP 100 and each of the APs 104 and 105 may be executed via a wired line. That is, in one example, the AP 100 is an access point complying with the IEEE802.11 standard series but may be a control apparatus connected, via a wire, to an AP that can execute communication complying with the IEEE802.11 standard series. In this case, the AP 100 need not comply with the IEEE802.11 standard series, and need not even have a wireless communication function. For example, in the example shown in Fig. 1, the APs 100 and 106 are connected via a wire, and the APs 100 and 104 are connected wirelessly. If the AP 100 transmits data to the STA 109 using the APs 106 and 104 as the SAPs, at least part of communication between the APs 100 and 106 may be transmitted/received via a wired line.

Furthermore, the SSIDs and BSSIDs of the APs 100, 104, 105, and 106 operating in cooperation with each other may be the same or different. Note that if the BSSIDs of the APs are the same, identifiers for identifying the APs 100 and 104 to 106 are additionally needed. If the SSIDs of the APs 104 to 106 are different, the STAs 107 to 109 that directly communicate with these APs need to belong to different networks at the same time. Therefore, the APs 100 and 104 to 106 can have different BSSIDs and the common SSID. Thus, the STA can identify each AP by the BSSID, and belongs to a given network, thereby allowing the APs to execute data communication in cooperation with each other.

### <Modification>

Similar to the above-described method, the AP 100 and the plurality of STAs can transmit/receive data via the SAPs (APs 104 and 105). For example, the AP 100 can communicate with the STA 109 via the AP 104 and communicate with the STA 107 via the AP 105. Note that as described above, without communicating with the STAs, the AP 100 may instruct, by the trigger frame, information such as frequency channels to be used with respect to communication between the AP 104 and the STA 109 and communication between the AP 105 and the STA 107. Note that in this processing, each of the APs 104 and 105 can notify the AP 100 of information (for example, AIDs) of communicable STAs in step S508 of Fig. 5A or step S808 of Fig. 8A. By obtaining the information of the STAs with which the APs 104 and 105 can communicate, the AP 100 can flexibly set the STA as a communication partner, and appropriately set frequency channels and the like to be used for communication with the STA.

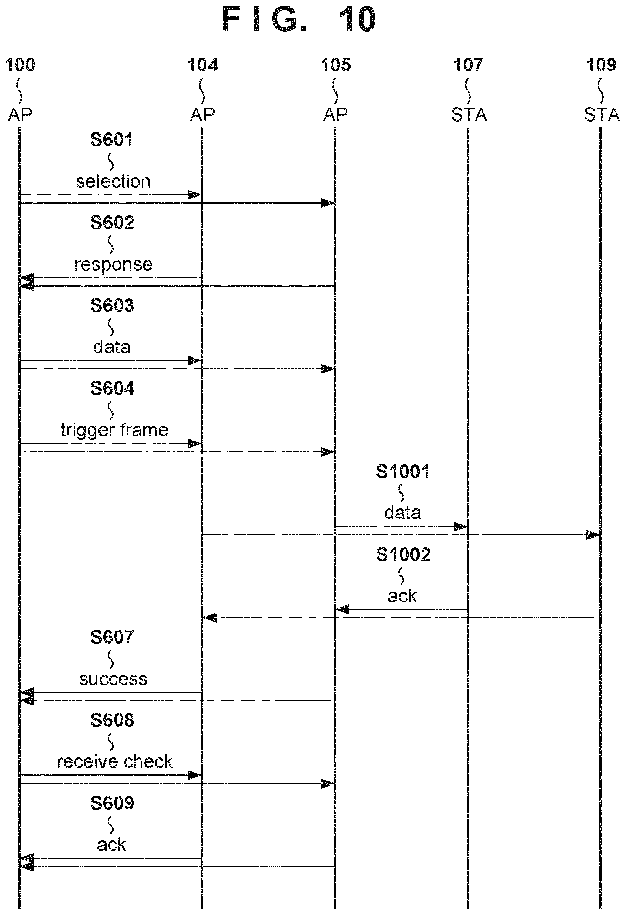

An example of the procedure of processing when transmitting data to the plurality of STAs will be described with reference to Fig. 10. Note that the same reference symbols as in the processing shown in Fig. 6 denote the same parts and a description thereof will be omitted. Each of the SAPs (APs 104 and 105) transmits data to the designated STA using the frequency channel and RU designated by the trigger frame received from the MAP (AP 100) (S1001). That is, as shown in, for example, Fig. 13, the trigger frame includes information for designating, by the User Info field for each SAP, the AID of the STA as a communication partner, the frequency channel to be used for communication with the STA, and RU allocation. In the example shown in Fig. 10, the AID of the STA 109 and the frequency channel to be used (and RU) are included in the User Info field of the AP 104, and the AID of the STA 107 and the frequency channel to be used (and RU) are included in the User Info field of the AP 105. Upon receiving the data from the SAP, each STA transmits a response (ACK) associated with the data (S 1002). Then, each of the APs 104 and 105 receives the response.

As described above, the MAP can control data transmission from the plurality of SAPs to the different STAs by designating the frequency channels and RUs. The AP 100 designates, for example, the use of channel 5 for communication between the AP 105 and the STA 107 and the use of channel 36 for communication between the AP 104 and the STA 109, thereby making it possible to prevent the communications from interfering with each other.

If the AP 100 does not transmit the data to the STAs and each SAP transmits held data to each STA, the AP 100 can obtain information of the buffer amount of the data to be transmitted from each SAP to each STA in S602 of Fig. 10. Note that in this case, the processing in S603 is omitted. Note that while the AP 104 transmits the data from the AP 100 to the STA 109, the AP 105 may transmit the data held in the self-apparatus to the STA 107. In this case, the AP 100 transmits the data to only the AP 104 in S603. Furthermore, while the AP 105 transmits the data from the AP 100 to the STA 107, the AP 104 may transmit the data held in the self-apparatus to the STA 109.

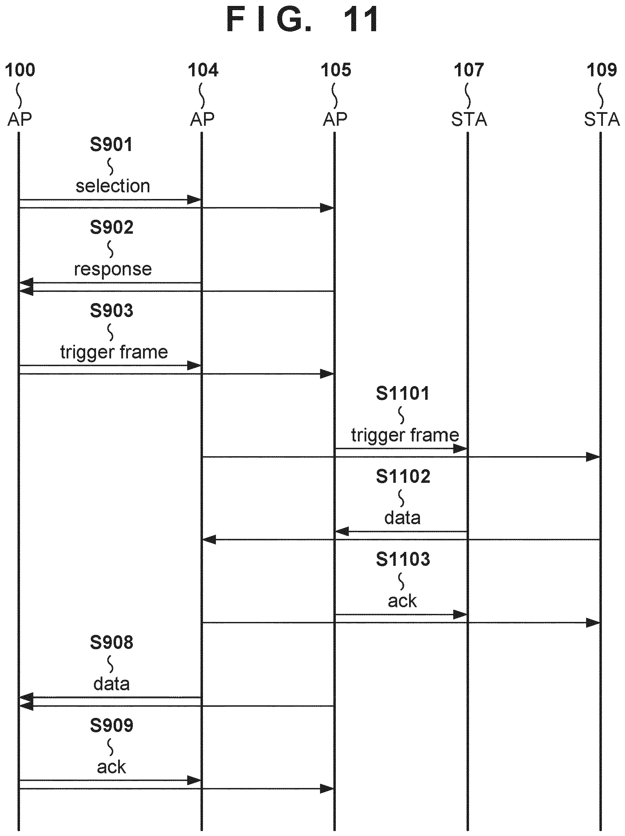

An example of the procedure of processing when transmitting data from the plurality of STAs will be described next with reference to Fig. 11. Note that the same reference symbols as in the processing shown in Fig. 9 denote the same parts and a description thereof will be omitted. Each SAP (each of the APs 104 and 105) transmits the trigger frame for triggering data transmission to the designated STA using the frequency channel and RU designated by the trigger frame received from the MAP (AP 100) (S1101). The trigger frame transmitted from the MAP to each SAP also includes information for designating, by the User Info field for each SAP, the AID of the STA as a communication partner, the frequency channel to be used for communication with the STA, and RU allocation. Then, each SAP transmits, to the STA as a communication partner, a trigger frame for designating that the data should be transmitted using the designated frequency channel (and RU). Based on the received trigger frame, each STA transmits the data to the SAP as the transmission source of the trigger frame using the designated frequency channel (and RU) (S1102). In the example shown in Fig. 11, the STA 107 transmits the data to the AP 105, and the STA 109 transmits the data to the AP 104. After that, each SAP transmits a response (ACK) associated with the received data to the STA as the transmission source of the data, and each STA receives the response (S1103).

As described above, the MAP can control data transmission from the plurality of STAs by designating the frequency channels and RUs. The AP 100 designates, for example, the use of channel 5 for communication between the AP 105 and the STA 107 and the use of channel 36 for communication between the AP 104 and the STA 109, thereby making it possible to prevent the communications from interfering with each other.

If the AP 100 does not receive the data from each STA and each STA transmits data destined for each SAP, the AP 100 can obtain, from each SAP, information of the buffer amount of the data to be transmitted by each STA in S902 of Fig. 11. Note that while the AP 104 transmits the data from the STA 109 to the AP 100, the AP 105 need not transfer, as data destined for the self-apparatus, the data from the STA 109 to the AP 100. Furthermore, while the AP 105 transmits the data from the STA 107 to the AP 100, the AP 104 need not transfer the data from the STA 109 to the AP 100.

By making it possible to execute the processing shown in Fig. 10 or 11, each of the APs 104 and 105 need only have some of the functions of the AP. That is, each of the APs 104 and 105 has only a function of operating as the SAP of Multi-AP communication by mainly performing operation management at the PHY level, and a general function of the AP such as RU allocation may be delegated to the MAP. Thus, in the system configuration using the plurality of APs, it is possible to suppress an increase in cost caused by an increase in the number of APs, and it is also possible to adjust the maximum throughput with the STA by flexibly changing the number of SAPs. For example, in a use case in which the low delay property of communication and a large communication capacity are required, such as MR (Mixed Reality) or VR (Virtual Reality), SAPs to be used can be increased. On the other hand, in communication of information of software update operating in the background or the like, the low delay property and a large communication capacity may not be required. In this case, SAPs to be used can be decreased. In this way, by adjusting the number of SAPs by the user (STA), it is possible to ensure necessary throughput and to readily increase the throughput.

In the above-described embodiment, transmission of data to the STA and reception of data from the STA have been explained separately. However, this is not intended to form each apparatus to execute only transmission or reception. For example, each apparatus may simultaneously execute data transmission and data reception and, for example, may alternately execute data transmission and data reception in a time-division manner. For example, the processes in S903 to S909 of Fig. 9 may be executed after the processes in S603 to S609 of Fig. 6, and then the processes in S603 to S609 of Fig. 6 may be executed again, as needed. For example, after the processes in S603 to S609 of Fig. 6 are repeated the first predetermined number of times (for example, three times), the processes in S903 to S909 of Fig. 9 may be repeated the second predetermined number of times (for example, five times). The processes in S903 to S909 of Fig. 9 may be executed before the processes in S603 to S609 of Fig. 6. In either case, the processes in S601 and S602 of Fig. 6 and the processes in S901 and S902 of Fig. 9 may be executed only once until, for example, transmission/reception of data of a given amount is completed. This can implement high-efficient data communication with the reduced overhead of communication control processing. The same applies to the processes shown in Figs. 10 and 11. Each apparatus may repeat each of the processes shown in Figs. 6 and 9 to 11, or repeat one of the processes a predetermined number of times and then execute another one of the processes. At this time, as described above, S601 and S602 of Figs. 6 and 10 and S901 and S902 of Figs. 9 and 11 may be executed only once or may be executed every time each process is started.

### «Other Embodiments»

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2020-115989 filed July 3, 2020, which is hereby incorporated by reference herein.

## Claims

1. A control apparatus comprising transmission means for transmitting, to a first communication apparatus, a frame for triggering communication complying with an IEEE802.11 standard series between the first communication apparatus and a second communication apparatus, which includes information concerning a frequency channel to be used for the communication.

2. The control apparatus according to claim 1, wherein in a case where a plurality of links are established between the first communication apparatus and the second communication apparatus, the transmission means transmits the frame by including information concerning which of the plurality of links is to be used for the communication.

3. The control apparatus according to claim 1, wherein in a case where a plurality of links using different frequency channels are established between the first communication apparatus and the second communication apparatus, the transmission means transmits the frame by including, as the information concerning the frequency channel, information concerning which of the plurality of links is to be used for the communication.

4. The control apparatus according to claim 2 or 3, wherein the transmission means transmits the frame by including, as the information concerning which of the plurality of links is to be used for the communication, a link number allocated to the link to be used, among link numbers respectively allocated to the plurality of links.

5. The control apparatus according to claim 4, wherein as the link number for each of the plurality of links, a link number allocated by the first communication apparatus is used.

6. The control apparatus according to claim 4, wherein as the link number for each of the plurality of links, a link number allocated by the control apparatus is used.

7. The control apparatus according to any one of claims 1 to 6, wherein the transmission means transmits the frame by including information of the first communication apparatus in association with the information concerning the frequency channel.

8. The control apparatus according to any one of claims 1 to 7, wherein the transmission means transmits the frame by including information of the second communication apparatus in association with the information concerning the frequency channel.

9. The control apparatus according to any one of claims 1 to 8, wherein the transmission means transmits the frame by including, as the information concerning the frequency channel, a value corresponding to a channel number defined in the IEEE802.11 standard series.

10. The control apparatus according to any one of claims 1 to 9, wherein the transmission means transmits the frame by including, as the information concerning the frequency channel, information indicating a resource unit to be allocated to the communication.

11. The control apparatus according to any one of claims 1 to 10, wherein the communication includes communication executed in a case where the first communication apparatus transfers communication between the control apparatus and the second communication apparatus.

12. The control apparatus according to any one of claims 1 to 11, wherein the frame is a trigger frame defined in the IEEE802.11 standard series, and the transmission means wirelessly transmits the frame to the first communication apparatus.

13. A communication apparatus comprising communication means for receiving, from a second another communication apparatus, a frame for triggering communication complying with an IEEE802.11 standard series with a first another communication apparatus, which includes information concerning a frequency channel to be used for the communication, and communicating with the first other communication apparatus based on the information concerning the frequency channel.

14. The communication apparatus according to claim 13, wherein in a case where a plurality of links are established between the communication apparatus and the first other communication apparatus, the frame includes information concerning which of the plurality of links is to be used for the communication between the communication apparatus and the first other communication apparatus.

15. The communication apparatus according to claim 13, wherein in a case where a plurality of links using different frequency channels are established between the communication apparatus and the first other communication apparatus, the frame includes, as the information concerning the frequency channel, information concerning which of the plurality of links is to be used for the communication between the communication apparatus and the first other communication apparatus.

16. The communication apparatus according to claim 14 or 15, wherein the frame includes, as the information concerning which of the plurality of links is to be used for the communication, a link number allocated to the link to be used, among link numbers respectively allocated to the plurality of links.

17. The communication apparatus according to claim 16, wherein as the link number for each of the plurality of links, a link number allocated by the communication apparatus is used.

18. The communication apparatus according to claim 16, wherein as the link number for each of the plurality of links, a link number allocated by the second other communication apparatus is used.

19. The communication apparatus according to any one of claims 13 to 18, wherein the frame includes information of the communication apparatus in association with the information concerning the frequency channel.

20. The communication apparatus according to any one of claims 13 to 19, wherein the frame includes information of the first other communication apparatus in association with the information concerning the frequency channel.

21. The communication apparatus according to any one of claims 13 to 20, wherein the frame includes, as the information concerning the frequency channel, a value corresponding to a channel number defined in the IEEE802.11 standard series.

22. The communication apparatus according to any one of claims 13 to 21, wherein the frame includes, as the information concerning the frequency channel, information indicating a resource unit to be allocated to the communication between the communication apparatus and the first other communication apparatus.

23. The communication apparatus according to any one of claims 13 to 22, wherein the communication includes communication executed in a case where the communication apparatus transfers communication between the second other communication apparatus and the first other communication apparatus.

24. The communication apparatus according to any one of claims 13 to 23, wherein the frame is a trigger frame defined in the IEEE802.11 standard series, and the communication means wirelessly receives the frame from the second other communication apparatus.

25. A control method executed by a control apparatus, comprising transmitting, to a first communication apparatus, a frame for triggering communication complying with an IEEE802.11 standard series between the first communication apparatus and a second communication apparatus, which includes information concerning a frequency channel to be used for the communication.

26. A communication method executed by a communication apparatus, comprising:
receiving, from a second another communication apparatus, a frame for triggering communication complying with an IEEE802.11 standard series with a first another communication apparatus, which includes information concerning a frequency channel to be used for the communication; and
communicating with the first other communication apparatus based on the information concerning the frequency channel.

27. A program for causing a computer to function as one of a control apparatus defined in any one of claims 1 to 12 and a communication apparatus defined in any one of claims 13 to 24.
